# EUROPEAN PATENT APPLICATION

(11) **EP 4 353 696 A1**
(43) Date of publication of application: **17.04.2024**
(21) Application number: 22820262.8
(22) Date of filing: 08.06.2022
(51) Int. Cl.: C03C 27/12, B32B 7/023, B32B 27/18, G02B 5/02, G03B 21/62

(54) **RESIN FILM, LAMINATED GLASS AND SCREEN**

(30) Priority: 11.06.2021 JP 2021098355
(71) Applicant: SEKISUI CHEMICAL CO., LTD., Osaka-shi Osaka 530-8565 (JP)
(72) Inventor: OOTA, Yuusuke, Koka-shi, Shiga 528-8585 (JP)
(74) Representative: Ter Meer Steinmeister & Partner
(86) International application number: PCT/JP2022/023130
(87) International publication number: WO 2022/260083

(57) **Abstract**

A resin film comprising a transparent resin layer comprising a thermoplastic resin, and a light diffusion layer comprising a thermoplastic resin and a light diffusion particle, in which the light diffusion layer is placed in the transparent resin layer, and the thickness of the light diffusion layer decreases from one end of the light diffusion layer toward other end opposite to the one end in one direction perpendicular to a thickness direction of the resin film, and a gradient of the thickness of the light diffusion layer is 0.9 mrad or less in a region located within 10% from the other end provided that a distance from the one end to the other end is 100%.

## Description

### Technical Field

The present invention relates to a resin film, a laminated glass and a screen each suitably usable in, for example, a screen for image display.

### Background Art

Laminated glass is widely used in window glass for various conveyances such as automobiles, railway vehicles, airplanes and marine vessels, and window glass for buildings and the like, because laminated glass is less prone to causing glass fragments to scatter even if it is subjected to an external impact and then broken, and is thus safe. Such laminated glass as is widely known is commonly one obtained by interposing an interlayer film for laminated glass configured from, for example, a thermoplastic resin, between paired sheets of glass, and then integrating the sheets of glass with the interlayer film.

A technique for producing an image projected from a projector on a transparent screen is in practical use. In recent years, there has been increased a need for projection and display of advertising and the like on, for example, window glass for vehicles such as automobiles, and window glass for buildings such as partitions and show windows, and laminated glass has been tried to be used for transparent screens. For example, PTL 1 discloses use of, as a transparent screen, a laminated glass comprising two transparent base materials such as glass plates, and a resin film placed as an interlayer film between the transparent base materials, in which the resin film comprises a light diffusible fine particle.

### Citation List

### Patent Literature

PTL 1: WO 2016/143566

### Summary of Invention

### Technical Problem

Meanwhile, a laminated glass for use in a transparent screen is sometimes allowed to partially display an image, and thus is examined to comprise a light diffusible fine particle and have a display region for image display, serving as one portion of the laminated glass.

However, if such a display region serves as one portion of the laminated glass, unnecessary light-scattering occurs at the boundary between such a display region and other region than such a display region, in irradiation of the laminated glass with light for image display, and such light-scattering may lead to loss in viewability, for example, may cause a white line to be found.

An object of the present invention is to provide a resin film, and a laminated glass and a screen each comprising the resin film, in which, even if a light diffusible particle is comprised and a display region for image display serves as a partial region, unnecessary light-scattering can be prevented to impart favorable viewability at the boundary between the display region and other region other than the display region.

### Solution to Problem

The present inventors have made intensive studies, and as a result, have found that the above problems can be solved by the following configuration, leading to completion of the present invention. The gist of the present invention is as follows.
[1] A resin film comprising a transparent resin layer comprising a thermoplastic resin, and a light diffusion layer comprising a thermoplastic resin and a light diffusion particle, wherein
   the light diffusion layer is placed in the transparent resin layer, and
   a thickness of the light diffusion layer decreases from one end of the light diffusion layer toward other end opposite to the one end in one direction perpendicular to a thickness direction of the resin film, a gradient of the thickness of the light diffusion layer is 0.9 mrad or less in a region located within 10% from the other end provided that a distance from the one end to the other end is 100%.
[2] The resin film according to [1], wherein a content of the light diffusion particle based on 100% by mass of the resin film in a region in which the light diffusion layer is provided is 0.00001% by mass or more and 1% by mass or less.
[3] The resin film according to [1] or [2], wherein, when a region in which the light diffusion layer is provided, of a laminated glass obtained by adhesion of two sheets of clear glass having a thickness of 2.5 mm with the resin film being interposed is irradiated with simulated solar light by a solar simulator, a ratio of a maximum intensity A at 430 to 460 nm to a maximum intensity B at 530 to 560 nm (maximum intensity A/maximum intensity B) of transmitted light is 1.0 or less.
[4] The resin film according to any one of [1] to [3], wherein, when a region in which the light diffusion layer is provided, of a laminated glass obtained by adhesion of two sheets of clear glass having a thickness of 2.5 mm with the resin film being interposed is irradiated with simulated solar light by a solar simulator, a ratio of a maximum intensity A at 430 to 460 nm to a maximum intensity C at 560 to 600 nm (maximum intensity A/maximum intensity C) of transmitted light is 1.2 or less.
[5] The resin film according to any one of [1] to [4], wherein the light diffusion particle is at least one selected from the group consisting of a nanoparticle comprising at least any of a silver element and a titanium element, or nanodiamond.
[6] The resin film according to any one of [1] to [5], wherein the thermoplastic resins comprised in the transparent resin layer and the light diffusion layer are each a polyvinyl acetal resin.
[7] The resin film according to any one of [1] to [6], wherein the transparent resin layer comprises a first resin layer and a second resin layer, and the light diffusion layer is placed between the first and second resin layers.
[8] The resin film according to any one of [1] to [7], wherein the transparent resin layer and the light diffusion layer each comprise a plasticizer.
[9] The resin film according to any one of [1] to [8], comprising third and fourth resin layers provided in the listed order, on one surface of the transparent resin layer.
[10] The resin film according to [9], wherein thermoplastic resins comprised in the third and fourth resin layers are each a polyvinyl acetal resin.
[11] The resin film according to [9] or [10], wherein
   the transparent resin layer, the light diffusion layer, and the third and fourth resin layers each comprise a plasticizer, and
   a content of the plasticizer based on 100 parts by mass of the thermoplastic resin in the third resin layer is higher than each content of the plasticizer based on 100 parts by mass of the thermoplastic resin in each of the transparent resin layer, the light diffusion layer, and the fourth resin layer.
[12] The resin film according to [9] or [11], wherein the thermoplastic resin comprised in each of the third and fourth resin layers is at least one selected from the group consisting of a polyvinyl acetal resin, an ethylene-vinyl acetate copolymer resin, an ionomer resin, a polyurethane resin, and a thermoplastic elastomer.
[13] The resin film according to any one of [1] to [12], wherein the thermoplastic resins comprised in the transparent resin layer and the light diffusion layer are each at least one selected from the group consisting of a polyvinyl acetal resin, an ethylene-vinyl acetate copolymer resin, an ionomer resin, a polyurethane resin, and a thermoplastic elastomer.
[14] The resin film according to any one of [1] to [13], wherein a thickness of a tip of the light diffusion layer at the other end side is 100 µm or less.
[15] The resin film according to any one of [1] to [14], wherein a shape of the light diffusion layer at the other end side is a cross-sectional triangle or a cross-sectional trapezoid.
[16] The resin film according to any one of [1] to [15], wherein the light diffusion layer is provided in a partial region of the resin film so that a region located at a tip relative to the other end in the one direction is a region in which the light diffusion layer is not provided.
[17] The resin film according to [16], wherein a visible light transmittance in a region in which the light diffusion layer is provided is lower than a visible light transmittance in the region in which the light diffusion layer is not provided.
[18] The resin film according to any one of [1] to [17], wherein a visible light transmittance in a region in which the light diffusion layer is provided, other than the region located within 10% from the other end, is 70% or more in a laminated glass obtained by adhesion of two sheets of clear glass having a thickness of 2.5 mm with the resin film being interposed.
[19] The resin film according to any one of [1] to [18], wherein a haze value in a region in which the light diffusion layer is provided, other than the region located within 10% from the other end, is 15% or less in a laminated glass obtained by adhesion of two sheets of clear glass having a thickness of 2.5 mm with the resin film being interposed.
[20] The resin film according to any one of [1] to [19], wherein a thickness is 100 µm or more and 3.0 mm or less.
[21] The resin film according to any one of [1] to [20], wherein a thickness of a largest portion of the light diffusion layer is 20 µm or more and 500 µm or less.
[22] The resin film according to any one of [1] to [21], wherein a thickness of the transparent resin layer is larger than a thickness of the light-scattering layer.
[23] The resin film according to any one of [1] to [22], wherein a content of the light diffusion particle in the light diffusion layer is 0.00005% by mass or more and 2% by mass or less in 100% by mass of the light diffusion layer.
[24] The resin film according to any one of [1] to [23], wherein the light diffusion particle is at least one selected from the group consisting of a semimetal or metal oxide particle, a metal particle, a diamond particle, calcium carbonate, glass flake, and mica.
[25] The resin film according to any one of [1] to [24], wherein the resin film is an interlayer film for laminated glass.
[26] A laminated glass comprising the resin film according to any one of [1] to [25] and paired glass members, wherein the resin film is placed between the paired glass members.
[27] A screen comprising the resin film according to any one of [1] to [26].
[28] A window glass comprising the resin film according to any one of [1] to [25], the laminated glass according to [26], or the screen according to [27].
[29] An image display system comprising the laminated glass according to [26] or the screen according to [27], and a light source apparatus.

### Advantageous Effects of Invention

According to the present invention, there can be provided a resin film, a laminated glass, and a screen, in which, even if a light diffusible fine particle is comprised and a display region for image display serves as a partial region, unnecessary light-scattering can be prevented to impart favorable viewability at the boundary between the display region and other region other than the display region.

### Brief Description of Drawings

[Fig. 1] A schematic cross-sectional view illustrating one embodiment of the resin film and the laminated glass of the present invention.
[Fig. 2] A schematic cross-sectional view illustrating one embodiment of the resin film and the laminated glass of the present invention.
[Fig. 3] A schematic cross-sectional view illustrating one embodiment of the resin film and the laminated glass of the present invention.
[Fig. 4] A schematic cross-sectional view illustrating one embodiment of the resin film and the laminated glass of the present invention.
[Fig. 5] A schematic view illustrating an image display system according to one embodiment of the present invention.
[Fig. 6] A schematic view illustrating a method for measuring maximum intensities A, B and C.

### Description of Embodiments

Hereinafter, the present invention is described in detail with reference to embodiments.

### <Resin film>

The resin film of the present invention comprises a light diffusion layer comprising a light diffusion particle and a thermoplastic resin, and a transparent resin layer comprising a thermoplastic resin. The resin film of the present invention is preferably used in a screen for image display, as described below. The resin film of the present invention, which comprises a light diffusion layer comprising a light diffusion particle, thus can allow light, with which the resin film is irradiated, to be diffused in the light diffusion layer, and thus allow an image corresponding to the light for irradiation to be displayed on a screen comprising the present film, by the light diffused.

The resin film is preferably an interlayer film for laminated glass, as described below, and, in particular, more preferably used in a screen for image display, configured by laminated glass.

Hereinafter, the structure of the resin film of the present invention is described with reference to the drawings.

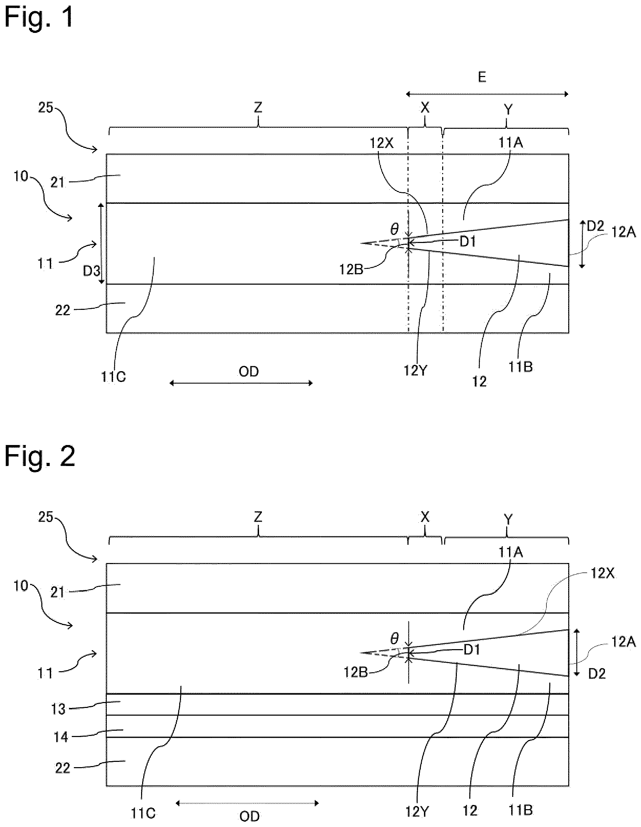

A resin film 10 comprises a transparent resin layer 11 and a light diffusion layer 12, as described above, and the light diffusion layer 12 is placed in the transparent resin layer 11. As illustrated in Fig. 1, the light diffusion layer 12 in the resin film 10 is provided in a partial region of the resin film 10, and a region in which the resin film 10 is provided serves as a display region for image display (regions X and Y) in use for a screen for image display and a region other than the display region herein serves as a region Z (also referred to as transparent region Z). The resin film 10 comprises the display region and the transparent region Z other than the display region, and thus can simultaneously satisfy excellent transparency and display ability.

The thickness of the light diffusion layer 12 decreases from one end 12A of the light diffusion layer 12 toward other end 12B opposite to the one end 12A in one direction OD (horizontal direction in Fig. 1) perpendicular to the thickness direction of the resin film. The thickness may continuously gradually decrease, and thus the light diffusion layer 12 has a taper shape along the one direction OD. The one direction OD is here typically MD (Machine direction) of the film, and may be TD (Traverse direction) perpendicular to MD or may be a direction other than MD and TD.

The gradient of the thickness of the light diffusion layer 12 is 0.9 mrad or less in a region X located within 10% from the other end 12B provided that the distance from the one end 12A to the other end 12B is 100%. When the gradient of the light diffusion layer 12 is more than 0.9 mrad, light-scattering occurring at the boundary between the display region and the transparent region Z in irradiation of a screen comprising the resin film 10 with light for image display may cause, for example, a white linear pattern, leading to deterioration in viewability. Such a linear pattern is easily caused particularly in irradiation with light having high brightness.

The gradient of the thickness of the light diffusion layer 12 here corresponds to an angle θ formed by connection and intersection of two sides constituting both surfaces 12X and 12Y of the light diffusion layer 12 in the region X, in a cross section along the one direction OD of the resin film 12 and the thickness direction of the film, as illustrated in Fig. 1.

The angle θ formed by two sides constituting both the surfaces 12X and 12Y may be a constant angle in the region X of the light diffusion layer 12, or may be changed at each position in the one direction OD from the one end 12A toward the other end 12B, and in this case, an angle formed by connection of the other end 12B of the light diffusion layer 12 and a point at a position of 10% from the other end 12B, with a straight line, may be defined as θ. The "10%" here mentioned is 10% provided that the distance from the one end 12A to the other end 12B is 100%.

The lower the gradient of the thickness of the light diffusion layer 12 in the region X is, the better, from the viewpoint of viewability, and is preferably 0.88 mrad or less, more preferably 0.86 mrad or less, further preferably 0.85 mrad or less.

The gradient of the thickness of the light diffusion layer 12 in the region X is preferably 0.05 mrad or more, more preferably 0.1 mrad or more, further preferably 0.2 mrad or more from the viewpoint that the areas of the display region and the entire resin film are easily equal to or less than certain values.

In the following description, a region other than the region X in the display region is a region Y (see Fig. 1).

The thickness of the light diffusion layer 12 may continuously decrease from the region Y toward the region X in the light diffusion layer 12. Accordingly, the thickness of the light diffusion layer 12 may decrease in not only the region X, but also in the region Y, and the smaller the gradient of the thickness in a region in which the thickness in the region Y decreases is, the better, from the viewpoint of viewability. Herein, the gradient of the thickness is not particularly limited, may be 0.9 mrad or less as in that in the region X, and is not necessarily needed to be 0.9 mrad or less.

The structure of the resin film 10 is more specifically described, and the resin film has a structure where the transparent resin layer 11 comprises a first resin layer 11A and a second resin layer 11B and the light diffusion layer 12 is placed between the first and second resin layers 11A and 11B and embedded between the resin layers 11A and 11B. The light diffusion layer 12 has a taper shape as described above, and the first resin layers 11A and 11B are directly laminated in a region (namely, region Z) located at a tip relative to a tip of the taper shape and are integrated and then configured from substantial one resin layer (integrated layer 11C). The region Z is configured from the first and second resin layers 11A and 11B high in transparency, and thus is a transparent region. On the other hand, the display region (namely, regions X and Y) is a transparent region, whereas the light diffusion layer 12, in which a light diffusion particle is compounded, is thus typically lower in visible light transmittance than the transparent region (region Z).

The light diffusion layer 12 having a taper shape has, for example, a cross-sectional trapezoid shape as illustrated in Fig. 1 and may have a constant thickness at the tip at the other end 12B side, or may have a cross-sectional triangular shape. The thickness (also referred to as "thickness D1") at the tip is, for example, 100 µm or less, and is preferably 80 µm or less, more preferably 60 µm or less. The thickness at the tip is equal to or less than the upper limit value, and thus unnecessary light-scattering hardly occurs at the tip of the light diffusion layer 12 in irradiation of the resin film with light for image display, and viewability is easily favorable. The smaller the thickness D1 is, the better, and it may be 0 µm or more, and is practically, for example, 5 µm or more.

The tip surface constituting the tip at the other end 12B side of the light diffusion layer 12 is generally a surface along the thickness direction, may be properly tilted against the thickness direction (for example, at about less than 60° relative to the thickness direction), may be a surface connected to the surfaces 12X and 12Y with a curved surface being interposed, or may be a surface having roundness of a curved surface.

The width E (namely, the distance from the one end 12A to the other end 12B) of the light diffusion layer is varied depending on the intended use, is not particularly limited and is any width, and is, for example, 10 mm or more and 5 m or less, preferably 20 mm or more and 3 m or less, more preferably 50 mm or more and 1 m or less.

The resin film 10 may include the transparent resin layer 11 and the light diffusion layer 12. In this case, for example, in the case of use for laminated glass, both surfaces of the transparent resin layer 11 (namely, the respective first and second resin layers 11A and 11B) may adhere to glass members 21 and 22 for constituting laminated glass 25, as illustrated in Fig. 1.

Herein, the resin film 10 may comprise a resin layer other than the transparent resin layer 11 and the light diffusion layer 12. Such other resin layers here provided may be of one resin layer or may be of two or more resin layers. For example, one or more resin layers may be provided on one surface of the transparent resin layer 11 or one or more resin layers may be provided on each of both surfaces of the transparent resin layer 11, and preferably, at least two resin layers may be provided on at least one surface of the transparent resin layer 11, specifically, third and fourth resin layers 13 and 14 may be provided in the listed order, as illustrated in Fig. 2. In this case, for example, the transparent resin layer 11 (first resin layer 11A) and the fourth resin layer 14 may adhere to, for example, the glass members 21 and 22 for constituting the laminated glass 25.

Such other resin layer(s) than the transparent resin layer 11 and the light diffusion layer 12 can be provided to thereby provide various performances to the resin film 10. For example, two resin layers (third and fourth resin layers 13 and 14) can be provided on one surface of the transparent resin layer 11, to thereby adjust the amount of the plasticizer in each of the resin layers, and the resin constituting each of the resin layers can be a polyvinyl acetal resin to appropriately adjust the amount of a hydroxyl group, thereby providing sound insulating performance to the resin film.

Such resin layers (for example, third and fourth resin layers 13 and 14) other than the transparent resin layer 11 and the light diffusion layer 12 are each a transparent resin layer, and thus transparency in the transparent region Z and the display region can be ensured.

The resin film may comprise a layer other than the above resin layers, and, for example, any other layers such as an adhesion layer or a barrier layer may be placed between the resin layers. Other layers such as an adhesion layer may also be placed between each of the glass members and each of the resin layers.

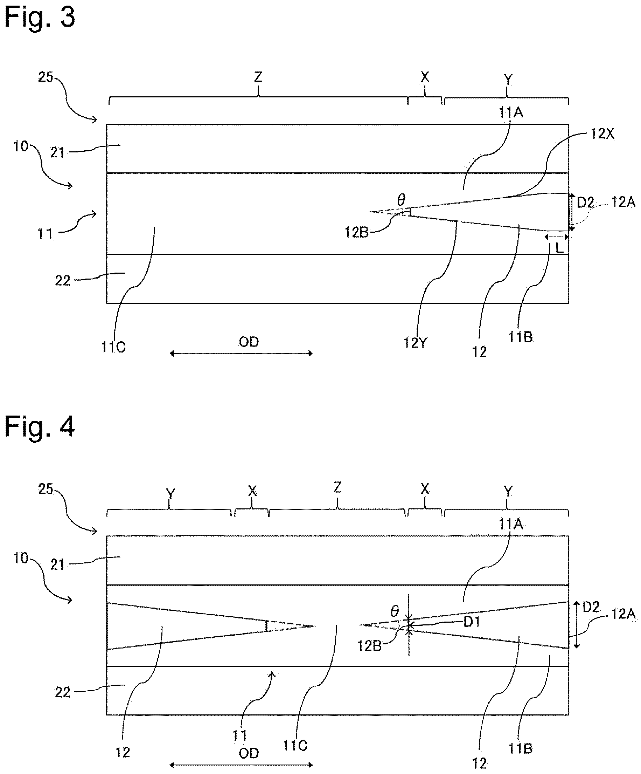

The configuration of the light diffusion layer 12 is not limited to the configurations of Figs. 1 and 2, and may comprise any other configurations. For example, the light diffusion layer 12, while includes a region (thickness change region) in which the thickness is changed from the one end 12A toward the other end 12B in the configurations of Figs. 1 and 2, may comprise a region other than the thickness change region. For example, a portion having a thickness D2 (namely, portion having the largest thickness), located at the one end 12A side of the thickness change region, may be provided so as to have a constant length L, as illustrated in Fig. 3. Herein, the light diffusion layer 12 has a taper shape at the other end 12B side also in this case, as described above, and may have, for example, a triangular shape or a trapezoid shape.

The light diffusion layer 12, while is provided on only one end portion of the resin film 10 in the one direction OD, may also be provided on both ends thereof, as illustrated in Fig. 4. In this case, display regions (regions X and Y) constituted by the light diffusion layer 12 are provided on both ends of the resin film 10, and a transparent region Z in which the light diffusion layer 12 is not provided is provided therebetween. Also in a case where the light diffusion layer 12 is provided on each of both ends, a portion having a thickness D2 may be provided so as to have a constant length L, as illustrated in Fig. 3.

Furthermore, while a configuration of the film 10, where the one end 12A of the light diffusion layer 12 is placed on an end portion of the film 10, is illustrated as in Figs. 1 to 4, such one end is not necessarily placed on an end portion of the film 10 and may be placed inside an end portion of the film 10.

### (Thickness of resin film)

The thickness of the resin film (namely, the thickness of the entire resin film) is not particularly limited, and is preferably 100 µm or more and 3.0 mm or less. The thickness of the resin film is 100 µm or more, and thus, for example, adhesiveness of the resin film, and penetration resistance and the like of laminated glass, in use as an interlayer film for laminated glass, can be improved. The thickness is 3.0 mm or less, and thus the thickness of the resin film is prevented from being excessively large and transparency is also easily ensured. The thickness of the resin film is more preferably 200 µm or more, further preferably 400 µm or more. The thickness is more preferably 2.0 mm or less, further preferably 1.5 mm or less. In the following description, the thickness of the resin film and the thickness of each of the resin layers other than the light diffusion layer (for example, a thickness D3 of the transparent resin layer, and the thicknesses of the third and fourth resin layers) each means the average thickness, unless particularly noted. The average thickness may be determined with a microscope, by 10-point average.

### (Thickness of light-scattering layer)

In the present invention, the thickness of the light diffusion layer is preferably 20 µm or more and 500 µm or less. The thickness of the light diffusion layer is in the above range, and thus certain light-scattering occurs in the light diffusion layer and an image is easily displayed at a proper brightness in use for a screen. The thickness of the light diffusion layer is more preferably 40 µm or more, further preferably 60 µm or more, and more preferably 400 µm or less, further preferably 300 µm or less from the above viewpoints. Herein, the thickness of the light diffusion layer is the thickness D2 (see Figs. 1 to 4) of a portion where the thickness of the light diffusion layer 12 is the largest, and is usually the thickness of a portion of the light diffusion layer 12, located at the one end 12A side.

### (Thickness of transparent resin layer)

The thickness D3 of the transparent resin layer is not particularly limited, may be more than the above-mentioned thickness of the light-scattering layer, and is preferably, for example, 80 µm or more and 2.5 mm or less. The thickness is 80 µm or more, and thus adhesiveness of the resin film, and penetration resistance and the like of laminated glass, in use as an interlayer film for laminated glass, can be favorable. The thickness is 2.5 mm or less, and thus the thickness of the resin film is prevented from being excessively large and transparency is also easily ensured. The thickness of each of the resin layers other than the light diffusion layer is more preferably 200 µm or more, further preferably 300 µm or more, and more preferably 1.8 mm or less, further preferably 1.3 mm or less from the above viewpoints. Herein, the thickness D3 of the transparent resin layer 11 is a distance from one surface to other surface of the transparent resin layer 11, as illustrated in Fig. 1.

### (Thicknesses of transparent resin layer and light diffusion layer)

The thickness of each of the resin layers other than the transparent resin layer and light diffusion layer is not particularly limited. For example, in a case where the third and fourth resin layers 13 and 14 are provided as illustrated in Fig. 2, the thickness of the third resin layer is preferably 20 µm or more and 300 µm or less, more preferably 50 µm or more and 250 µm or less, further preferably 75 µm or more and 200 µm or less from the viewpoint that various performances such as sound insulating performance are enhanced without any excess increase in thickness of the resin film. The thickness of the fourth resin layer is preferably 100 µm or more and 600 µm or less, more preferably 150 µm or more and 500 µm or less, further preferably 200 µm or more and 400 µm or less.

### (Maximum intensity ratio)

It is preferable in the resin film of the present invention that, when a region in which the light diffusion layer is provided, of a laminated glass produced by adhesion of two sheets of standard glass with the resin film being interposed is irradiated with simulated solar light, the ratio of the maximum intensity A at 430 to 460 nm to the maximum intensity B at 530 to 560 nm (maximum intensity A/maximum intensity B) of transmitted light be 1.0 or less.

The standard glass is here clear glass having a thickness of 2.5 mm, more specifically clear glass having a thickness of 2.5 mm, according to JIS R 3211 (1998), and one having a visible light transmittance of 90.4% may be used. The simulated solar light is radiated by a solar simulator.

A wavelength of 430 to 460 nm is a wavelength at which blue light appears, and a wavelength of 530 to 560 nm is a wavelength at which green light appears. Accordingly, the maximum intensity A/maximum intensity B is 1.0 or less, and thus blue light is prevented from being excessively diffused by a light diffusion particle as compared with green light. Therefore, color reproducibility can be enhanced when the resin film is used for a screen and then an image is displayed in a display region. The maximum intensity A/maximum intensity B is more preferably 0.9 or less, further preferably 0.8 or less from the viewpoint of an enhancement in color reproducibility.

The maximum intensity A/maximum intensity B is preferably 0.1 or more, further preferably 0.3 or more, still further preferably 0.5 or more from the viewpoint of prevention of excessive diffusion of green light by a light diffusion particle and an enhancement in color reproducibility.

It is preferable in the resin film of the present invention that, when a region in which the light diffusion layer is provided, of a laminated glass produced by adhesion of two sheets of standard glass with the resin film being interposed is irradiated with simulated solar light, the ratio of the maximum intensity A at 430 to 460 nm to the maximum intensity C at 560 to 600 nm (maximum intensity A/maximum intensity C) of transmitted light be 1.2 or less.

A wavelength of 430 to 460 nm is a wavelength at which blue light appears, and a wavelength of 560 to 600 nm is a wavelength at which red light appears. Accordingly, the maximum intensity A/maximum intensity C is 1.2 or less, and thus blue light is prevented from being excessively diffused by a light diffusion particle as compared with red light. Therefore, color reproducibility can be enhanced when the resin film is used for a screen and then an image is displayed in a display region. The maximum intensity A/maximum intensity C is more preferably 1.1 or less, further preferably 1.05 or less from the viewpoint of an enhancement in color reproducibility.

The maximum intensity A/maximum intensity C is preferably 0.2 or more, further preferably 0.4 or more, still further preferably 0.6 or more from the viewpoint of prevention of excessive diffusion of red light by a light diffusion particle and an enhancement in color reproducibility.

The maximum intensities A, B and C are values of the respective maximum intensities in a wavelength region of 430 to 460 nm, a wavelength region of 530 to 560 nm, and a wavelength region of 560 to 600 nm.

The maximum intensities A, B and C may be determined by irradiation of any one surface of laminated glass with simulated solar light and measurement on other surface thereof, in which such intensities may be each determined by irradiation of the region Y and measurement of the maximum intensity at the position where irradiation with simulated solar light is made. A portion of the light diffusion layer, in which the thickness is maximum, and the vicinity thereof may be irradiated with simulated solar light, and the maximum intensities A, B and C at the portion in which the thickness is maximum, or a position closer to the portion in which the thickness is maximum, as much as possible, may be measured.

The above maximum intensity ratio can be adjusted in the above predetermined range by appropriately selecting the type, particle size, particle size distribution, and the like of the light diffusion particle comprised in the resin film. For example, the use of the light diffusion particle being composite and control of a particle size distribution of the light diffusion particle are exemplified as described below.

### (Transmittance)

It is preferable in the resin film of the present invention that the transmittance in the region Y in a laminated glass produced by adhesion of two sheets of standard glass with the resin film being interposed be 70% or more. The transmittance means a visible light transmittance and can be determined by measurement according to JIS R3212 (2015).

The transmittance in the region Y is 70% or more, and thus certain transparency can be retained also in a display region, and suitable use in various kinds of window glass can be made, for example, use in a windshield for automobiles can also be made. The transmittance is more preferably 75% or more, further preferably 80% or more from the viewpoint that higher transparency is ensured.

The higher the transmittance is, the better, from the viewpoint that transparency of the resin film is ensured, and is practically 99% or less and is preferably 97% or less from the viewpoint that light is appropriately diffused in the resin film.

While the transmittance in the region Y may be different with respect to each position due to the change in thickness of the light diffusion layer, as described above, the transmittance of a portion having the lowest transmittance may be in the above range.

It is preferable in the resin film of the present invention that the transmittance in the region Z (namely, transparent region) in a laminated glass produced by adhesion of two sheets of standard glass with the resin film being interposed be higher than the transmittance in the region Y, specifically 75% or more. The transmittance means a visible light transmittance and can be determined by measurement according to JIS R3212 (2015).

The transmittance in the region Z is 75% or more, and thus an excellent transparency can be ensured in a transparent region Z and suitable use in various types of window glass can be made, for example, use in a windshield for automobiles can also be made. The transmittance is more preferably 80% or more, further preferably 85% or more, from the viewpoint that higher transparency is ensured.

The higher the transmittance is, the better, from the viewpoint that transparency of the resin film is ensured, and is practically 99% or less.

### (Haze value)

It is preferable in the resin film of the present invention that the haze value in the region Y of a laminated glass produced by adhesion of two sheets of standard glass with the resin film being interposed be 15% or less. The haze value is equal to or less than the upper limit value, and thus transparency of the resin film can be sufficiently ensured even in a display region. The haze value is more preferably 10% or less, further preferably 6% or less, still further preferably 4% or less from the viewpoint of a more enhancement in transparency. The haze value is, for example, 0.5% or more, preferably 1% or more, more preferably 2% or more from the viewpoint that a certain amount of light is diffused by the light diffusion particle to appropriately perform image display. The haze value can be here measured according to JIS K6714.

While the haze value in the region Y may be different with respect to each position due to the change in thickness of the light diffusion layer, as described above, the haze value of a portion having the highest haze value may be in the above range.

It is preferable in the resin film of the present invention that the haze value in the region Z (namely, transparent region) of a laminated glass produced by adhesion of two sheets of standard glass with the resin film being interposed be lower than that in a display region, preferably 12% or less. The haze value is equal to or less than the upper limit value, and thus transparency and viewability of the resin film can be sufficiently ensured in the transparent region. The haze value is more preferably 8% or less, further preferably 5% or less, still further preferably 3% or less from the viewpoint of more enhancements in transparency and viewability. The haze value in the region Z may be 0% or more.

### [Light diffusion particle]

Examples of the light diffusion particle for use in the resin film of the present invention include particles of semimetal or metal oxides, for example, silicon oxide such as silica, zirconium oxide, titanium oxide, aluminum oxide such as alumina, magnesium oxide, and cerium oxide, particles of metals such as aluminum, silver, platinum, gold, titanium, nickel, tin, indium, and an tin-cobalt alloy, diamond particles, calcium carbonate, glass flake, and mica.

In particular, a semimetal or metal oxide particle, a metal particle, or a diamond particle is preferable, and, in particular, a metal particle, a metal oxide particle, or a diamond particle is more preferable, from the viewpoint that not only transparency of the resin film is ensured, but also light diffusivity, color reproducibility and the like are easily favorable. The metal element used in such a metal or metal oxide particle is preferably a silver element or a titanium element, and therefore a particle comprising at least any of a silver element and a titanium element, or a diamond particle is preferable, in particular, a silver particle, a titanium oxide particle, or a diamond particle is further preferable, and a silver particle is particularly preferable.

The light diffusion particle may be a core-shell particle. For example, the light diffusion particle is also preferably a core-shell particle where any of the above semimetal or metal oxide particles, metal particles, diamond particles, and the like serves as a core and is coated with a different material.

More specifically, the light diffusion particle may be a metal particle (core-shell particle) where the metal particle serves as a core and the above semimetal or metal oxide or a composite of the semimetal or metal oxide with a polymer serves as a shell. The light diffusion particle may be a metal particle (core-shell particle) where the metal oxide particle serves as a core and the above semimetal or metal oxide or a composite of the semimetal or metal oxide with a polymer serves as a shell. In this case, a particle comprising metal and metal oxide may serve as a core instead of the metal oxide particle.

The light diffusion particle may be a core-shell particle in which the semimetal or metal oxide serves as a core and metal serves as a shell. Furthermore, the light diffusion particle may be a core-shell particle where silica, alumina and a mixture thereof serve as a shell, or a core-shell particle where a composite of silica, alumina and a mixture thereof, with a polymer, serves as a shell. The light diffusion particle may be one comprising a core-shell particle where the mixture serves as a shell, and a core-shell particle where the composite serves as a shell. In particular, a metal particle (core-shell particle) where the metal particle serves as a core is preferable. A metal oxide particle (core-shell particle) where the metal oxide particle serves as a core is also preferable. Furthermore, a core-shell particle where a particle comprising both metal and metal oxide serves as a core may also be adopted. More specifically, the light diffusion particle may be a core-shell particle where a particle comprising a silver element such as silver serves as a core, may be a core-shell particle where a particle comprising a titanium element such as titanium oxide serves as a core, or may be a core-shell particle where a particle comprising both a silver element and a titanium element serves as a core.

For example, the silver particle (preferably a silver nanoparticle described below) may be a particle where the silver particle serves as a core and silica, alumina or a mixture thereof, a composite of silica, alumina or a mixture thereof, and a polymer such as polyvinylpyrrolidone, or the like serves as a shell.

The core-shell particle may be a particle where silica serves as a core and silver or other metal serves as a shell.

The light diffusion particle may be used singly or in combinations of two or more kinds thereof.

The average particle size of the light diffusion particle is preferably, for example, 1 nm or more and 100 µm or less. The average particle size is in the above range, and thus visible light is appropriately diffused by the light diffusion particle and, for example, color reproducibility in image display can be improved. The average particle size of the light diffusion particle is preferably 3 nm or more and 50 µm or less, more preferably 5 nm or more and 20 µm or less, preferably 10 nm or more and 5 µm or less from the viewpoint that light diffusivity is improved, for example, the above intensity ratio is easily in the above range and from the viewpoint that color reproducibility is enhanced.

The average particle size of the light diffusion particle can be here measured by a laser diffraction/scattering method.

The light diffusion particle is preferably a so-called nanoparticle from the viewpoint of appropriate light diffusion and thus an enhancement in color reproducibility.
Accordingly, the light diffusion particle is more preferably a nanoparticle comprising at least any of a silver element and a titanium element, further preferably a silver nanoparticle, a titanium oxide nanoparticle, or nanodiamond, in particular, particularly preferably a silver nanoparticle. The nanoparticle is here a particle having an average particle size of 1 µm or less (1000 nm or less), and the average particle size of the nanoparticle is preferably 900 nm or less. The lower limit value of the average particle size of the nanoparticle is as described with respect to the above light diffusion particle, and the average particle size of the nanoparticle may be 50 nm or more, or may be 110 nm or more.

The light diffusion particle here used may be of two or more kinds of particles different in composition from each other, preferably, three or more kinds of particles different in composition from one another, for example, from the viewpoint that the above intensity ratio is easily in the above range and from the viewpoint that color reproducibility is enhanced. For example, the core-shell particle here used may be of at least two, preferably three kinds of particles which are the same in terms of the materials of the core and the shell and in which the respective mass proportions of the shells in the particles are different from one another.

The particle size distribution of the light diffusion particle may be appropriately adjusted so that the intensity ratio is in a desired range.

The content of a particle having a small particle size is favorably lower and, in particular, the content of a particle of 10 nm or less is favorably lower, for example, from the viewpoint that the above intensity ratio is easily in the above range and from the viewpoint that color reproducibility is enhanced. When the particle of 10 nm or less is comprised more, light at a shorter wavelength is more easily dispersed. Two or more kinds of light-scattering particles different in average particle size may also be mixed from the viewpoint that both transparency and display ability are satisfied.

The shape of the light diffusion particle is not particularly limited, and may be a flake-like shape such as a plate-like or scale-like shape, or may be a spherical shape or a shape approximate to a spherical shape (substantially spherical shape), a polyhedral shape or a shape approximate to a polyhedron (for example, a shape where a polyhedron is partially in the form of a curved plane, a substantial polyhedron), an amorphous shape, or the like.

The light diffusion particle may have, for example, an aspect ratio of less than 3, preferably 2 or less. The light diffusion particle, which is reduced in aspect ratio, thus is easily improved in light diffusivity with the haze being low. Here, the light diffusion particle, which is spherical or substantially spherical, generally has an aspect ratio of 2 or less, which is a value close to 1.

The aspect ratio may be determined as the ratio between the longer size and the shorter size of the particle, and may be measured as longer size/thickness in the case of a flake-like light diffusion particle. The aspect ratio may be here determined by, for example, subjecting 50 particles to measurement by observation with a microscope such as SEM and determining the average value.

The content of the light diffusion particle in a region of the resin film, in which the light diffusion layer is provided (namely, display region), is preferably 0.00001% by mass or more and 1% by mass or less based on 100% by mass of the resin film. The content of the light diffusion particle is equal to or more than the lower limit value, and thus light can be properly diffused in the display region and an image can be appropriately displayed. The content is equal to or less than the upper limit value, and thus transparency can be ensured even in the display region and the haze value and the transmittance in the display region are easily adjusted in desired ranges without excess shielding of light by the light diffusion particle. The content of the light diffusion particle in 100% by mass of the resin film is more preferably 0.00005% by mass or more, further preferably 0.0001% by mass or more, still further preferably 0.0008% by mass or more, and more preferably 0.5% by mass or less, further preferably 0.1% by mass or less, still further preferably 0.09% by mass or less, still further preferably 0.05% by mass or less, particularly preferably 0.01% by mass or less, from the above viewpoints.

While the content ratio of the light diffusion particle in the display region is also changed according the change in thickness of the light diffusion layer, the above content of the light diffusion particle represents the ratio of the light diffusion particle relative to all the layers of the resin film, in the entire display region of the resin film.

The content of the light diffusion particle in the light diffusion layer is preferably 0.00005% by mass or more and 2% by mass or less in 100% by mass of the light diffusion layer. The content of the light diffusion particle in the light diffusion layer is equal to or more than the lower limit value, and thus light can be properly diffused in the light diffusion layer and an image can be appropriately displayed. The content is equal to or less than the upper limit value, and thus transparency of the resin film is easily ensured without excess shielding of light by the light diffusion particle. The content of the light diffusion particle in 100% by mass of the light diffusion layer is more preferably 0.0001% by mass or more, further preferably 0.0005% by mass or more, still further preferably 0.005% by mass or more, and more preferably 1 mass or less, further preferably 0.5% by mass or less, still further preferably 0.1% by mass or less, still further preferably 0.09% by mass or less, particularly preferably 0.03% by mass or less, from the above viewpoints.

The light diffusion layer comprises a thermoplastic resin as described above, and the light diffusion particle is dispersed in the thermoplastic resin. The light diffusion layer comprises the thermoplastic resin, to thereby allow the light diffusion layer to easily adhere to a transparent resin layer. Similarly, such a transparent resin layer (namely, first and second resin layers) also comprises the thermoplastic resin.

In the following description, the thermoplastic resin for use in the light diffusion layer may be described as a thermoplastic resin (A), and the thermoplastic resin for use in the transparent resin layer may be described as a thermoplastic resin (B).

The thermoplastic resins (A) and (B) respectively used in the light diffusion layer and the transparent resin layer are not particularly limited, and examples include a polyvinyl acetal resin, an ethylene-vinyl acetate copolymer resin, an ionomer resin, a polyurethane resin, and a thermoplastic elastomer. Such a resin is used, and thus adhesiveness to a glass member is enhanced, and suitable use as an interlayer film for laminated glass can be made. In particular, the thermoplastic resins (A) and (B) are preferably a polyvinyl acetal resin. A polyvinyl acetal resin is used, and thus adhesiveness to a glass member, in particular, adhesiveness in the case of inorganic glass as the glass member is easily improved, and particularly suitable use as an interlayer film for laminated glass can be made. In addition, characteristics necessary for laminated glass, such as penetration resistance and sound insulating performance, are easily obtained.

The thermoplastic resins for use as the thermoplastic resins (A) and (B) may be adopted singly or in combinations of two or more thereof. The detail of the thermoplastic resins are described below.

The light diffusion layer in the present invention preferably further comprises a plasticizer. The transparent resin layer (first and second resin layers) also preferably comprises a plasticizer. The plasticizer comprised in the light diffusion layer may be referred to as "plasticizer (A)", and the plasticizer comprised in the transparent resin layer may be referred to as "plasticizer (B)".

The light diffusion layer and the transparent resin layer comprise the plasticizers, and thus are flexible, and as a result, allow laminated glass to be enhanced in flexibility and easily enhanced in penetration resistance and sound insulating performance in use of the resin film as an interlayer film for laminated glass. The light diffusion layer comprises the light diffusion particle and the plasticizer, and thus an image displayed can be much further increased in contrast in use of the resin film in a screen for image display. Such an increase is considered to be due to an increase in difference in refractive index between the light diffusion layer and the light diffusion particle by inclusion of the plasticizer.

The light diffusion layer and the transparent resin layer each comprise the plasticizer, thereby enabling adhesiveness to, for example, a glass member forming the laminated glass, or other resin layer and the like forming the resin film, to be enhanced. The plasticizers (A) and (B) are particularly effective in a case where a polyvinyl acetal resin (A) is used as each of the thermoplastic resins (A) and (B). The details of the plasticizers (A) and (B) are described below.

The content (hereinafter, sometimes designated as "content (A)") of the plasticizer (A) based on 100 parts by mass of the thermoplastic resin (A), in the light diffusion layer, is preferably 10 parts by mass or more. The content (hereinafter, sometimes designated as "content (B)") of the plasticizer (B) based on 100 parts by mass of the thermoplastic resin (B), in the transparent resin layer, is preferably 10 parts by mass or more. The contents of the plasticizers are each equal to or more than the lower limit, and thus the resin film is enhanced in flexibility and the resin film is easily handled. The contents (A) and (B) of the plasticizers are each more preferably 15 parts by mass or more, further preferably 20 parts by mass or more, particularly preferably 24 parts by mass or more from the above viewpoints.

The contents (A) and (B) are each preferably 60 parts by mass or less, more preferably 50 parts by mass or less, further preferably 45 parts by mass or less. The contents are each equal to or less than the upper limit, and thus the resin film is improved in mechanical characteristics such as flexural rigidity.

The thermoplastic resins respectively used in the thermoplastic resins (A) and (B) may be different types of resins from each other, and are preferably the same types of resins as each other. Accordingly, the thermoplastic resins (A) and (B) are each preferably a polyvinyl acetal resin.

The respective compositions of the first and second resin layers constituting the transparent resin layer may be the same as or different from each other, and are preferably the same as each other. In other words, the thermoplastic resins respectively used in the first and second resin layers may be different types of resins from each other, and are preferably the same types of resins as each other. Accordingly, the thermoplastic resin (B) used in each of the first and second resin layers is preferably a polyvinyl acetal resin.

The light diffusion layer and the transparent resin layer preferably each comprise a plasticizer, and the first and second resin layers preferably each comprise a plasticizer. The respective types of the plasticizers for use in the light diffusion layer and the transparent resin layer may also be different from or the same as each other. The above content (A) and content (B) may be the same as or different from each other.

The respective contents of the plasticizers in the first and second resin layers constituting the transparent resin layer, based on 100 parts by mass of the thermoplastic resin, may be different from each other, and are preferably the same as each other. Suitable ranges of the respective contents of the plasticizers in the first and second resin layers constituting the transparent resin layer, based on 100 parts by mass of the thermoplastic resin, are as described in the content (B). The respective types of the plasticizers for use in the first and second resin layers constituting the transparent resin layer may be different from each other, and are preferably the same as each other.

The light diffusion layer and the transparent resin layer (first and second resin layers) each mainly comprise the thermoplastic resin, or the thermoplastic resin and the plasticizer, and the total amount of the thermoplastic resin and the plasticizer is preferably 70% by mass or more, more preferably 80% by mass or more, further preferably 90% by mass or more based on the total amount of the light diffusion layer or the transparent resin layer.

### [Resin layer other than light diffusion layer and transparent resin layer]

Each of the resin layers (for example, third and fourth resin layers) other than the light diffusion layer and the transparent resin layer in the resin film is a layer comprising a thermoplastic resin. A thermoplastic resin is used as a resin in each of the resin layers other than the light diffusion layer and the transparent resin layer, thereby allowing each of the resin layers to easily adhere to other resin layer, a glass member, and/or the like.

In the following description, the respective thermoplastic resins for use in the third and fourth resin layers may be referred to as "thermoplastic resin (C)" and "thermoplastic resin (D)".

The respective thermoplastic resins (for example, thermoplastic resins (C) and (D)) for use in the resin layers other than the light diffusion layer and the transparent resin layer are not particularly limited, and, for example, the respective resins here used can be appropriately selected from those listed as resins usable as the thermoplastic resins (A) and (B). In particular, a polyvinyl acetal resin is preferable. A polyvinyl acetal resin is used to thereby improve adhesiveness to a glass member, particularly, adhesiveness in the case of inorganic glass as the glass member and allow for suitable use as an interlayer film for laminated glass. In addition, characteristics necessary for an interlayer film for laminated glass, such as penetration resistance and sound insulating performance, are easily obtained.

The thermoplastic resin for use in each of the resin layers other than the light diffusion layer may be used singly or in combinations of two or more kinds thereof.

The type of the thermoplastic resin for use in each of the resin layers other than the light diffusion layer is the same as that of the thermoplastic resins (A) and (B), for example, from the viewpoint of an enhancement in adhesiveness. Accordingly, in a case where the resin film comprises the third and fourth resin layers and the thermoplastic resins (A) and (B) are each a polyvinyl acetal resin, the thermoplastic resins (C) and (D) are each preferably a polyvinyl acetal resin.

The detail of the thermoplastic resin for use in each of the resin layers other than the light diffusion layer and the transparent resin layer is described below.

Each of the resin layers other than the light diffusion layer in the resin film also preferably comprises a plasticizer. In other words, the third resin layer in the resin film preferably comprises a plasticizer. The fourth resin layer preferably comprises a plasticizer. Accordingly, in a case where the resin film comprises the third and fourth resin layers, all the light diffusion layer, the transparent resin layer, and the third and fourth resin layers each preferably comprise a plasticizer.

The respective plasticizers comprised in the third and fourth resin layers may be referred to as "plasticizer (C)" and "plasticizer (D)".

The content of the plasticizer (C) in the third resin layer based on 100 parts by mass of the thermoplastic resin (C) may be designated as "content (C)", and the content of the plasticizer (D) in the fourth resin layer based on 100 parts by mass of the thermoplastic resin (D) may be designated as "content (D)".

The resin film comprises the plasticizer in each of the resin layers other than the light diffusion layer and the transparent resin layer, and thus is flexible, and as a result, allows laminated glass to be enhanced in flexibility and also enhanced in penetration resistance in use as an interlayer film for laminated glass. Furthermore, high adhesiveness to a glass member such as a glass plate or other resin layers in the resin film can also be exhibited. In a case where a polyvinyl acetal resin is used as the thermoplastic resin also in each of the resin layers other than the light diffusion layer and the transparent resin layer, it is particularly effective to comprise a plasticizer. The types of the plasticizers (for example, plasticizers (C) and (D)) for use in the resin layers other than the light diffusion layer and the transparent resin layer may be each the same as or different from that of the plasticizer (A) and (B). The types of the plasticizers (for example, plasticizers (C) and (D)) for use in the resin layers other than the light diffusion layer and the transparent resin layer may be the same as or different from each other.

Each of the plasticizers for use in the resin layers other than the light diffusion layer and the transparent resin layer may be used singly or in combinations of two or more kinds thereof.

The contents of the plasticizers in the resin layers other than the light diffusion layer based on 100 parts by mass of the thermoplastic resin are each, for example, 10 parts by mass or more. The contents of the plasticizers are each equal to or more than the lower limit, and thus the resin film is enhanced in flexibility and the resin film is easily handled.

In a case where the third and fourth resin layers are comprised as described above, the content of the plasticizer based on 100 parts by mass of the thermoplastic resin in the third resin layer (hereinafter, sometimes referred to as "content (C)") is preferably higher than not only the contents (A) and (B), but also the content of the plasticizer based on 100 parts by mass of the thermoplastic resin in the fourth resin layer (hereinafter, sometimes referred to as "content (D)"). In a case where the third and fourth resin layers are provided, the resin film is enhanced in sound insulating performance when the content of the plasticizer in the third resin layer is higher and the resin film is used as an interlayer film for laminated glass.

The content (C) is preferably 20 parts by mass or more, more preferably 30 parts by mass or more, further preferably 40 parts by mass or more, more preferably 50 parts by mass or more from the viewpoint of an enhancement in sound insulating performance. The content (C) is preferably 100 parts by mass or less, more preferably 90 parts by mass or less, further preferably 85 parts by mass or less, particularly preferably 80 parts by mass or less. The content (C) is equal to or less than the upper limit, and thus the resin film, when used in laminated glass, allows the laminated glass to be easily enhanced in penetration resistance.

On the other hand, the content (D) is preferably 10 parts by mass or more, more preferably 15 parts by mass or more, further preferably 20 parts by mass or more, particularly preferably 24 parts by mass or more from the viewpoint of handleability and flexibility of the resin film. The content (D) is preferably 60 parts by mass or less, more preferably 50 parts by mass or less, further preferably 45 parts by mass or less from the viewpoint of mechanical characteristics such as flexural rigidity.

Each of the resin layers (for example, third and fourth resin layers) other than the light diffusion layer mainly comprises the thermoplastic resin, or the thermoplastic resin and the plasticizer, and the total amount of the thermoplastic resin and the plasticizer is preferably 70% by mass or more, more preferably 80% by mass or more, further preferably 90% by mass or more based on the total amount of each of the resin layers.

Each of the resin layers (for example, transparent resin layer (or first and second resin layers), third resin layer, fourth resin layer) other than the light diffusion layer may comprise the above light diffusion particle, and may be designed so that the content of the light diffusion particle relative to the resin film in a display region is in the above range. Each of the resin layers other than the light diffusion layer, even if comprising the above light diffusion particle, preferably comprises a low content of the light diffusion particle, or preferably comprises no light diffusion particle, more preferably comprises no light diffusion particle.

As described above, each of the resin layers other than the light diffusion layer comprises no light diffusion particle, or even if comprising the light diffusion particle, comprises a small amount of the light diffusion particle (at least a lower content than that in the light diffusion layer), and thus almost no light-scattering is caused in each of the resin layers. Thus, an image displayed can be increased in contrast in use of the resin film in an image display screen. The content of the light diffusion particle in each of the resin layers (for example, each of transparent resin layer (or first and second resin layers), third resin layer, and fourth resin layer) other than the light diffusion layer is not particularly limited, and is, for example, less than 0.1% by mass, preferably less than 0.0005% by mass, more preferably less than 0.00001% by mass, further preferably 0% by mass.

### (Polyvinyl acetal resin)

Hereinafter, the details of the respective polyvinyl acetal resins for use in the resin layers are described. In the following description, the configuration common to the respective polyvinyl acetal resins for use in the resin layers is described simply in terms of "polyvinyl acetal resin". Separate constitutions of the polyvinyl acetal resins respectively used in the light diffusion layer, the transparent resin layer, the third resin layer, and the fourth resin layer are described as "polyvinyl acetal resin (A)", "polyvinyl acetal resin (B)", "polyvinyl acetal resin (C)", and "polyvinyl acetal resin (D)".

The polyvinyl acetal resin is obtained by acetalization of polyvinyl alcohol (PVA) with aldehyde. In other words, the polyvinyl acetal resin is preferably an acetalized product of polyvinyl alcohol (PVA). Polyvinyl alcohol (PVA) is obtained by saponification of, for example, polyvinyl ester such as polyvinyl acetate. The degree of saponification of polyvinyl alcohol is generally 70 to 99.9% by mol. The polyvinyl acetal resin may be used singly or in combinations of two or more thereof.

The average degree of polymerization of the polyvinyl acetal resin is preferably 200 or more, more preferably 500 or more, further preferably 1000 or more, still further preferably 1500 or more. The average degree of polymerization is equal to or more than the lower limit, and thus penetration resistance of laminated glass is enhanced. The average degree of polymerization of the polyvinyl acetal resin is preferably 5000 or less, more preferably 4000 or less, further preferably 3500 or less. The average degree of polymerization is equal to or less than the upper limit, and thus the resin film is easily formed.

The average degrees of polymerization of the polyvinyl acetal resins for use in the respective resin layers may be the same as or different from each other.

In a case where the content of the plasticizer is increased, the average degree of polymerization of the polyvinyl acetal resin is preferably increased. Accordingly, for example, in a case where the content (C) of the plasticizer in the third resin layer is, for example, 55 parts by mass or more, the average degree of polymerization of the polyvinyl acetal resin (C) is suitably 2000 or more, and may be 2500 or more.

The average degree of polymerization of the polyvinyl acetal resin (C) may be lower than, the same as, or higher than the average degree of polymerization of each of the polyvinyl acetal resins (for example, polyvinyl acetal resins (A), (B), and (D) in the resin layers other than the third resin layer. Herein, the average degree of polymerization of the polyvinyl acetal resin (C) is preferably higher than the average degree of polymerization of the polyvinyl acetal resin in each of the resin layers other than the third resin layer. Thus, in a case where the average degree of polymerization of the polyvinyl acetal resin (C) is increased, various performances are easily kept, for example, even if the content of the plasticizer in the third resin layer is increased.

The average degree of polymerization of a polyvinyl acetal resin is the same as the average degree of polymerization of PVA serving as a raw material of such a polyvinyl acetal resin, and the average degree of polymerization of PVA is determined by a method according to JIS K6726 "polyvinyl alcohol test method".

The aldehyde for use in acetalization is not particularly limited, an aldehyde having 1 to 10 carbon atoms is suitably used, an aldehyde having 3 to 5 carbon atoms is more preferable, an aldehyde having 4 or 5 carbon atoms is further preferable, and an aldehyde having 4 carbon atoms is particularly preferable.

The aldehyde having 1 to 10 carbon atoms is not particularly limited, and examples thereof include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde and benzaldehyde. In particular, acetaldehyde, propionaldehyde, n-butyraldehyde, isobutyraldehyde, n-hexylaldehyde or n-valeraldehyde is preferable, propionaldehyde, n-butyraldehyde, isobutyraldehyde or n-valeraldehyde is more preferable, n-butyraldehyde or n-valeraldehyde is further preferable, and n-butyraldehyde is most preferable. The aldehyde may be used singly or in combinations of two or more thereof.

The number of carbon atoms in an acetal group contained in the polyvinyl acetal resin is not particularly limited, and is preferably 1 to 10, more preferably 3 to 5, further preferably 4 or 5, particularly preferably 4. A specific acetal group is particularly preferably a butyral group, and accordingly, the polyvinyl acetal resin is preferably a polyvinyl butyral resin. In other words, the thermoplastic resins (A) and (B) in the light diffusion layer and the transparent resin layer are each preferably a polyvinyl butyral resin in the present invention. In a case where the third and fourth resin layers are comprised, all the thermoplastic resins (A) (B), (C), and (D) in not only the light diffusion layer and the transparent resin layer, but also the third and fourth resin layers, are each preferably a polyvinyl butyral resin. In other words, in a case where the resin film comprises a plurality of resin layers, the thermoplastic resins in all the resin layers are preferably polyvinyl butyral resins.

The respective content rates of hydroxyl groups (amounts of hydroxyl groups) in the polyvinyl acetal resins (A) and (B) and furthermore the polyvinyl acetal resin (D) in the case of the fourth resin layer being provided are each, for example, 20% by mol or more, preferably 25% by mol or more, more preferably 28% by mol or more. The content rates of the hydroxyl groups are each equal to or more than the lower limit, and thus adhesion force of the resin film is favorable and furthermore not only sound insulating performance is kept, but also flexural rigidity can be more enhanced. The respective content rates of hydroxyl groups in the polyvinyl acetal resins (A), (B), and (D) are each preferably 38% by mol or less, more preferably 36% by mol or less, further preferably 34% by mol or less. The content rates of the hydroxyl groups are equal to or less than the upper limit, and thus the polyvinyl acetal resin is easily precipitated in synthesis of the polyvinyl acetal resin. The respective content rates of hydroxyl groups of the polyvinyl acetal resins (A), (B), and (D) may be the same as or different from one another.

The content rate (amount of hydroxyl group) of a hydroxyl group in the polyvinyl acetal resin (C) is preferably 17% by mol or more, more preferably 20% by mol or more, and is, for example, 38% by mol or less, preferably 34% by mol or less. The content rate of the hydroxyl group is equal to or more than the lower limit, and thus the resin film is much more increased in adhesion force. The content rate is more preferably 30% by mol or less, further preferably 27% by mol or less, from the viewpoint that the polyvinyl acetal resin (C) absorbs the plasticizer to enhance sound insulating performance of laminated glass. The content rate of a hydroxyl group in the polyvinyl acetal resin (C) is 20% by mol or more, resulting in a high reaction efficiency and excellent productivity.

The content rate of a hydroxyl group in the polyvinyl acetal resin (C) is lower than the content rate of a hydroxyl group in the polyvinyl acetal resin used in each of the resin layers other than the third resin layer from the viewpoint of a much more enhancement in sound insulating performance. Accordingly, the content rate of a hydroxyl group in the polyvinyl acetal resin (C) is preferably lower than the content rates of hydroxyl groups in the polyvinyl acetal resins (A), (B), and (D).

In a case where the content rate of a hydroxyl group in the polyvinyl acetal resin (C) is lower than the content rate of a hydroxyl group in the polyvinyl acetal resin in each of the resin layers other than the third resin layer, the absolute value of the difference between these content rates is preferably 1% by mol or more. Thus, sound insulating performance can be much further enhanced. The absolute value of the difference between these content rates of hydroxyl groups is more preferably 5% by mol or more from such a viewpoint. The absolute value of the difference between these content rates of hydroxyl groups is preferably 20% by mol or less.

The content rate of a hydroxyl group in the polyvinyl acetal resin is the value obtained by expressing a molar fraction as a percentage, the molar fraction being determined by dividing the amount of an ethylene group to which a hydroxyl group is bound, by the amount of the entire ethylene group in a main chain. The amount of an ethylene group to which a hydroxyl group is bound can be measured according to, for example, JIS K6728 "polyvinyl butyral test method".

The respective degrees of acetalization (degrees of butyralization in the case of a polyvinyl butyral resin) of the polyvinyl acetal resins (A) and (B) and furthermore the polyvinyl acetal resin (D) in the case of the fourth resin layer being provided are each preferably 55% by mol or more, more preferably 60% by mol or more, further preferably 63% by mol or more, and preferably 85% by mol or less, more preferably 80% by mol or less, further preferably 75% by mol or less. The degrees of acetalization are each equal to or more than the lower limit, and thus compatibility between the polyvinyl acetal resin and the plasticizer is enhanced. The degrees of acetalization are each equal to or less than the upper limit, and thus the amount of the remaining aldehyde in the resin can be decreased.

The respective degrees of acetalization of the polyvinyl acetal resins (A) (B), and (D) may be the same as or different from one another.

The degree of acetalization of the polyvinyl acetal resin (C) is preferably 47% by mol or more, more preferably 55% by mol or more, further preferably 60% by mol or more, and preferably 85% by mol or less, more preferably 80% by mol or less, further preferably 75% by mol or less. The respective degrees of acetalization are each equal to or more than the lower limit, and thus compatibility between the polyvinyl acetal resin (C) and the plasticizer is enhanced. The respective degrees of acetalization are each equal to or less than the upper limit, and thus the amount of the remaining aldehyde in each of the resins can be decreased. The degrees of acetalization each mean the degree of butyralization in a case where the acetal group is a butyral group and the polyvinyl acetal resin (C) is a polyvinyl butyral resin.

Each of the degrees of acetalization is the value obtained by expressing a molar fraction as a percentage, the molar fraction being determined by dividing the value obtained by subtracting the amount of an ethylene group to which a hydroxyl group is bound and the amount of an ethylene group to which an acetyl group is bound, from the amount of the entire ethylene group in a main chain, by the amount of the entire ethylene group in a main chain. The degree of acetalization (degree of butyralization) may be calculated from the result measured by a method according to JIS K6728 "polyvinyl butyral test method".

The respective degrees of acetylation of the polyvinyl acetal resins (A) and (B) and furthermore the polyvinyl acetal resin (D) in the case of the fourth resin layer being provided are each preferably 10% by mol or less, more preferably 2% by mol or less. The degrees of acetylation are each equal to or less than the upper limit, and thus the resin film is enhanced in moisture resistance. The degrees are not particularly limited, and are each preferably 0.01% by mol or more, more preferably 0.1% by mol or more. The respective degrees of acetalization of the polyvinyl acetal resins (A) (B), and (D) may be the same as or different from one another.

The degree of acetylation (amount of acetyl group) of the polyvinyl acetal resin (C) is preferably 0.01% by mol or more, more preferably 0.1% by mol or more. The degree of acetylation is further preferably 7% by mol or more, particularly preferably 9% by mol or more, from the viewpoint that compatibility between the polyvinyl acetal resin and the plasticizer is enhanced and a large amount of the plasticizer is easily compounded. The degree of acetylation of the polyvinyl acetal resin (C) is preferably 30% by mol or less, more preferably 25% by mol or less, further preferably 24% by mol or less, particularly preferably 20% by mol or less. The degree of acetylation is equal to or less than the upper limit, and thus the resin film is enhanced in moisture resistance.

The degree of acetylation is the value obtained by expressing a molar fraction as a percentage, the molar fraction being determined by dividing the amount of an ethylene group to which an acetyl group is bound, by the amount of the entire ethylene group in a main chain. The amount of an ethylene group to which an acetyl group is bound can be measured according to, for example, JIS K6728 "polyvinyl butyral test method".

The polyvinyl acetal resin (B) in the first resin layer and the polyvinyl acetal resin (B) in the second resin layer, with respect to the polyvinyl acetal resins (B) in the first and second resin layers constituting the transparent resin layer, are preferably the same as each other, and may be different from each other. Accordingly, the respective average degrees of polymerization, the respective amounts of hydroxyl groups, the respective degrees of acetalization, and the respective degrees of acetylation are each preferably the same as each other, and may be each different from each other.

### (Ethylene-vinyl acetate copolymer resin)

The ethylene-vinyl acetate copolymer resin may be a non-crosslinked ethylene-vinyl acetate copolymer resin or a high-temperature crosslinked ethylene-vinyl acetate copolymer resin. The ethylene-vinyl acetate copolymer resin here used can also be an ethylene-vinyl acetate-modified resin such as a saponified product of an ethylene-vinyl acetate copolymer or a hydrolyzed product of ethylene-vinyl acetate.

The content of vinyl acetate in the ethylene-vinyl acetate copolymer resin, as measured according to JIS K 6730 "ethylene-vinyl acetate resin test method", is preferably 10 to 50% by mass, more preferably 20 to 40% by mass. The content of vinyl acetate is equal to or more than the lower limit value, and thus adhesiveness to, for example, a glass plate is improved and furthermore penetration resistance of laminated glass is easily improved in use of the resin film as an interlayer film for laminated glass. The content of vinyl acetate is equal to or less than the upper limit value, and thus rupture strength of the resin film is increased and impact resistance of laminated glass is improved.

### (Ionomer resin)

An ionomer resin is not particularly limited, and various ionomer resins can be used. Specific examples include an ethylene-based ionomer, a styrene-based ionomer, a perfluorocarbon-based ionomer, a telechelic ionomer and a polyurethane ionomer. In particular, an ethylene-based ionomer is preferable from the viewpoint that a screen is improved in, for example, mechanical strength, durability and/or transparency and from the viewpoint that, when a glass plate is inorganic glass, adhesiveness to such a glass plate is excellent.

An ionomer of an ethylene-unsaturated carboxylic acid copolymer is suitably used as the ethylene-based ionomer because of being excellent in transparency and toughness. The ethylene-unsaturated carboxylic acid copolymer is a copolymer having at least an ethylene-derived structural unit and an unsaturated carboxylic acid-derived structural unit, and may have other monomer-derived structural unit.

Examples of the unsaturated carboxylic acid include acrylic acid, methacrylic acid and maleic acid, and acrylic acid and methacrylic acid are preferable. Examples of such other monomer include acrylate, methacrylate and 1-butene.

The ethylene-unsaturated carboxylic acid copolymer preferably has 75 to 99% by mol of an ethylene-derived structural unit and preferably has 1 to 25% by mol of an unsaturated carboxylic acid-derived structural unit, under the assumption that all structural units in the copolymer correspond to 100% by mol.

The ionomer of the ethylene-unsaturated carboxylic acid copolymer is an ionomer resin obtained by at least partially neutralizing or crosslinking a carboxyl group in the ethylene-unsaturated carboxylic acid copolymer by a metal ion, and the degree of neutralization of the carboxyl group is usually 1 to 90%, preferably 5 to 85%.

Examples of an ion source in the ionomer resin include alkali metals such as lithium, sodium, potassium, rubidium and cesium, and polyvalent metals such as magnesium, calcium and zinc, and sodium and zinc are preferable.

The ionomer resin is not particularly limited in terms of the production method, and can be produced by a conventionally known production method. For example, in a case where the ionomer of the ethylene-unsaturated carboxylic acid copolymer is used as the ionomer resin, for example, ethylene and unsaturated carboxylic acid are radically copolymerized at a high temperature and at a high pressure, and thus the ethylene-unsaturated carboxylic acid copolymer is produced. The ethylene-unsaturated carboxylic acid copolymer and a metal compound comprising the ion source are reacted, and thus the ionomer of the ethylene-unsaturated carboxylic acid copolymer can be produced.

### (Polyurethane resin)

Examples of the polyurethane resin include polyurethane obtained by reacting an isocyanate compound and a diol compound, and polyurethane obtained by reacting an isocyanate compound, a diol compound, and a chain extender such as polyamine. The polyurethane resin may contain a sulfur atom. In this case, the diol may be partially or fully one selected from polythiol and sulfur-containing polyol. The polyurethane resin can improve adhesiveness to organic glass. Thus, the polyurethane resin is suitably used in a case where a glass plate is organic glass.

### (Thermoplastic elastomer)

Examples of the thermoplastic elastomer include a styrene-based thermoplastic elastomer and an aliphatic polyolefin. The styrene-based thermoplastic elastomer is not particularly limited, and known one can be used. The general styrene-based thermoplastic elastomer generally has a polymer block of a styrene monomer, serving as a hard segment, and a polymer block of a conjugated diene compound, or a hydrogenated block thereof, serving as a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and hydrogenated products thereof.

The aliphatic polyolefin may be a saturated aliphatic polyolefin or an unsaturated aliphatic polyolefin. The aliphatic polyolefin may be a polyolefin with a linear olefin as a monomer, or a polyolefin with a cyclic olefin as a monomer. The aliphatic polyolefin is preferably a saturated aliphatic polyolefin, from the viewpoint that the resin film is effectively enhanced in storage stability and sound insulating performance.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene and vinyl cylcohexane.

### (Plasticizer)

Hereinafter, the details of the respective plasticizers for use in the resin layers are described. In the following description, the respective plasticizers (for example, plasticizers (A), (B), (C), and (D)) for use in the resin layers are collectively described.

Examples of the respective plasticizers for use in the resin layers include organic ester plasticizers such as a monobasic organic acid ester and a polybasic organic acid ester, and phosphorous plasticizers such as an organic phosphoric acid ester plasticizer and an organic phosphorus acid ester plasticizer. In particular, an organic ester plasticizer is preferable. The plasticizer is preferably a liquid plasticizer. The liquid plasticizer is a plasticizer which is liquid at ordinary temperature (23°C) and ordinary pressure (1 atm).

Examples of the monobasic organic acid ester include an ester of glycol and monobasic organic acid. Examples of the glycol include polyalkylene glycol where each alkylene unit has 2 to 4 carbon atoms, preferably 2 or 3 carbon atoms, and the number of such alkylene units repeated is 2 to 10, preferably 2 to 4. The glycol may also be a monoalkylene glycol where the number of carbon atoms is 2 to 4, preferably 2 or 3, and the number of repeating units is 1.

Specific examples of the glycol include ethylene glycol, diethylene glycol, triethylene glycol, tetraethylene glycol, propylene glycol, dipropylene glycol, tripropylene glycol, tetrapropylene glycol and butylene glycol.

Examples of the monobasic organic acid include an organic acid having 3 to 10 carbon atoms, and specifically include butyric acid, isobutyric acid, caproic acid, 2-ethylbutyric acid, 2-ethylpentanoic acid, heptylic acid, n-octylic acid, 2-ethylhexylic acid, n-nonylic acid and decylic acid.

A preferable monobasic organic acid ester is, for example, a compound represented by the following formula (1): 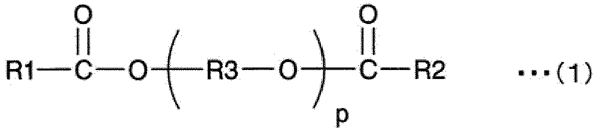 wherein R1 and R2 each represent an organic group having 2 to 10 carbon atoms, R3 represents an ethylene group, an isopropylene group or a n-propylene group, and p represents an integer of 3 to 10, and wherein R1 and R2 each preferably have 5 to 10 carbon atoms, more preferably 6 to 10 carbon atoms. The organic groups in R1 and R2 are each preferably a hydrocarbon group, more preferably an alkyl group.

Specific examples of the glycol ester include ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol dicapryate, diethylene glycol di-2-ethylhexanoate, dipropylene glycol di-2-ethylbutyrate, triethylene glycol di-2-ethylhexanoate, triethylene glycol dicaprylate, triethylene glycol di-2-ethylpentanoate, triethylene glycol di-n-heptanoate, triethylene glycol di-2-ethylbutyrate, triethylene glycol di-2-ethyl propanoate, tetraethylene glycol di-n-heptanoate, tetraethylene glycol di-2-ethylhexanoate and tetraethylene glycol di-2-ethylbutyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. The alcohol having 4 to 10 carbon atoms may be straight, may have a branched structure, or may have a cyclic structure.

Specific examples include dibutyl sebacate, dioctyl azelate, dihexyl adipate, dioctyl adipate, hexylcyclohexyl adipate, diisononyl adipate, heptylnonyl adipate, di-(2-butoxyethyl) adipate, dibutylcarbitol adipate and mixed adipate. For example, oil-modified sebacic acid alkyd may also be adopted. Examples of the mixed adipate include an adipate produced from two or more alcohols selected from an alkyl alcohol having 4 to 9 carbon atoms and a cyclic alcohol having 4 to 9 carbon atoms.

Examples of the organic phosphorous plasticizer include phosphoric acid esters such as tributoxyethyl phosphate, isodecylphenyl phosphate and triisopropyl phosphate.

The plasticizer may be used singly or in combinations of two or more thereof.

The plasticizer is, in particular, preferably selected from di-(2-butoxyethyl) adipate (DBEA), triethylene glycol di-2-ethylhexanoate (3GO), triethylene glycol di-2-ethylbutyrate (3GH) and triethylene glycol di-2-ethylpropanoate, more preferably selected from triethylene glycol di-2-ethylhexanoate (3GO), triethylene glycol di-2-ethylbutyrate (3GH) and triethylene glycol di-2-ethylpropanoate, further preferably selected from triethylene glycol di-2-ethylhexanoate and triethylene glycol di-2-ethylbutyrate, particularly preferably triethylene glycol di-2-ethylhexanoate.

### [Other additive(s)]

The resin film of the present invention preferably comprises at least one additive selected from the group consisting of an ultraviolet absorber, an antioxidant, and a light stabilizer. The resin film of the present invention, which comprises such additive(s), thus can be enhanced in durability, and allows an image displayed to be improved even after use under an environment of irradiation with solar light or the like for a long period. The resin film more preferably comprises at least an ultraviolet absorber and an antioxidant, further preferably comprises all of an ultraviolet absorber, an antioxidant and a light stabilizer from the viewpoint of a more enhancement in durability.

The additive may be comprised in at least the light diffusion layer, and is preferably comprised in not only the light diffusion layer, but also other resin layers (for example, transparent resin layer, or transparent resin layer and third and fourth resin layers).

The light diffusion layer, in particular, more preferably comprises an ultraviolet absorber and an antioxidant, further preferably comprises all of an ultraviolet absorber, an antioxidant, and a light stabilizer. Not only the light diffusion layer, but also other resin layers (for example, transparent resin layer, or transparent resin layer and third and fourth resin layers) more preferably comprise(s) an ultraviolet absorber and an antioxidant, further preferably comprise(s) all of an ultraviolet absorber, an antioxidant, and a light stabilizer.

### (Ultraviolet absorber)

The ultraviolet absorber here used can be, for example, a malonate backbone-containing compound, an oxalic anilide backbone-containing compound, benzotriazole backbone-containing compound, a benzophenone backbone-containing compound, a triazine backbone-containing compound, a benzoate backbone-containing compound, or a hindered amine backbone-containing compound. In particular, a benzotriazole backbone-containing compound (benzotriazole-based compound) is preferable.

The ultraviolet absorber absorbs ultraviolet light contained in solar light or the like to prevent the resin film from being degraded by irradiation with solar light or the like, resulting in an enhancement in durability.

Preferred specific examples of the benzotriazole-based compound include a compound represented by the following general formula (2): 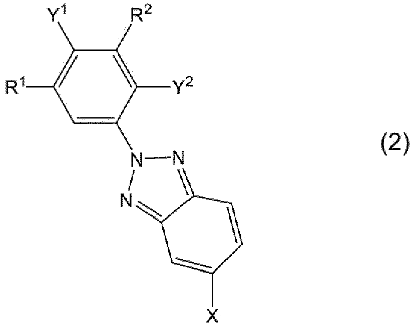 wherein R¹ represents a hydrogen atom, an alkyl group having 1 to 8 carbon atoms, or an alkoxycarbonylalkyl group having 4 to 20 carbon atoms, and R² represents a hydrogen atom, or an alkyl group having 1 to 8 carbon atoms; X represents a halogen atom or a hydrogen atom; and Y¹ and Y² each independently represent a hydroxyl group or a hydrogen atom, and at least any one of Y¹ and Y² represents a hydroxyl group.

In the formula (1), the alkyl groups in R¹ and R² may each have a straight structure or a branched structure. The alkoxycarbonylalkyl group may have a straight structure or a branched structure. Examples of R¹ and R² include a hydrogen atom, a methyl group, an ethyl group, a n-propyl group, an iso-propyl group, a n-butyl group, a tert-butyl group, a pentyl group, a hexyl group, and an octyl group. Examples of R¹ additionally include a methoxycarbonylpropyl group and an octyloxycarbonylpropyl group. In particular, R¹ preferably represents a hydrogen atom or an alkyl group, particularly preferably a hydrogen atom, a methyl group, a tert-butyl group, a pentyl group, or an octyl group. R¹ and R² may be the same as or different from each other.

Examples of the halogen atom in X include a fluorine atom, a chlorine atom, a bromine atom, and an iodine atom, and a chlorine atom is preferable.

Only any one of Y¹ and Y² may represent a hydroxyl group, or both thereof may represent hydroxyl groups. It is preferable that at least Y² represent a hydroxyl group.

Specific examples of the compound represented by the formula (1) include 2-(3-t-butyl-5-methyl-2-hydroxyphenyl)-5-chlorobenzotriazole, 2-(3,5-di-t-butyl-2-hydroxyphenyl)-5-chlorobenzotriazole, octyl 3-[3-tert-butyl-5-(5-chloro-2H-benzotriazol-2-yl)-4-hydroxyphenyl]propionate, methyl 3-(5-chloro-2H-benzotriazol-2-yl)-5-(1,1-dimethylethyl)-4-hydroxyphenylpropionate, 2-(3,5-di-tert-amyl-2-hydroxyphenyl)benzotriazole, and 2-(2,4-dihydroxyphenyl)-2H-benzotriazole.

The ultraviolet absorber may be used singly or in combinations of two or more kinds thereof.

The content of the ultraviolet absorber in each of the resin layers (for example, each of diffusion layer, transparent resin layer (or first and second resin layers), and third and fourth resin layers) is preferably 0.01 parts by mass or more and 2 parts by mass or less based on 100 parts by mass of the thermoplastic resin. The content is 0.01 parts by mass or more, and thus each of the resin layers can be appropriately prevented from being degraded due to ultraviolet light contained in solar light and can also be enhanced in durability. The content is 2 parts by mass or less, and thus the ultraviolet absorber can allow the resin layer to be prevented from being colored and the effect corresponding to the content is also easily exerted.

The content of the ultraviolet absorber is more preferably 0.05 parts by mass or more and 1.5 parts by mass or less, further preferably 0.1 parts by mass or more and 1.1 parts by mass or less based on 100 parts by mass of the thermoplastic resin.

### (Antioxidant)

Examples of the antioxidant include a phenol-based compound, a phosphoric acid-based compound, and a sulfur-based compound. The antioxidant allows the resin film to be prevented from being oxidized and degraded, and to be enhanced in durability. In particular, a phenol-based compound is suitable from the viewpoint of an enhancement in durability.

Examples of the phenol-based compound include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane,1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and pentaerythritol tetrakis[3-(3,5-di-tert-butyl-4-hydroxyphenyl)propionate].

Examples of the phosphoric acid-based compound include trisnonylphenyl phosphite, tridecyl phosphite, 2-ethyl-2-butylpropylene-4,6-tri-tert-butylphenol phosphite, 9,10-dihydro-9-oxa-10-phosphaphenanthrene, tetra(tridecyl)isopropylidenediphenol diphosphite, and tris[2-tert-butyl-4-(3-tert-hydroxy-5-methylphenylthio)-5-methylphenyl]phosphite.

Examples of the sulfur-based compound include dialkyl thiodipropionates such as dilauryl thiodipropionate, dimyristyl thiodipropionate, and distearyl thiodipropionate, and β-alkylmercaptopropionates of polyols, such as pentaerythritol tetra(β-dodecylmercaptopropionate).

The antioxidant may be used singly or in combinations of two or more kinds thereof.

The content of the antioxidant in each of the resin layers (for example, each of diffusion layer, transparent resin layer (or first and second resin layers), and third and fourth resin layers) is preferably 0.01 parts by mass or more and 2 parts by mass or less based on 100 parts by mass of the thermoplastic resin. The content is 0.01 parts by mass or more, and thus the resin film can be appropriately prevented from being oxidized and degraded and can be enhanced in durability. The content is 2 parts by mass or less, and thus the effect corresponding to the content is also easily exerted.

The content of the ultraviolet absorber is more preferably 0.04 parts by mass or more and 1.5 parts by mass or less, further preferably 0.06 parts by mass or more and 1.1 parts by mass or less based on 100 parts by mass of the thermoplastic resin.

### (Light stabilizer)

The light stabilizer is preferably a hindered amine light stabilizer. The light stabilizer allows the resin film to be prevented from being degraded due to irradiation with ultraviolet light contained in solar light or the like.

Examples of the hindered amine light stabilizer include a hindered amine light stabilizer where an alkyl group, an alkoxy group or a hydrogen atom is bound to a nitrogen atom of a piperidine structure. A hindered amine light stabilizer where an alkyl group or an alkoxy group is bound to a nitrogen atom of a piperidine structure is preferable from the viewpoint of much more suppression of degradation. The hindered amine light stabilizer is preferably a hindered amine light stabilizer where an alkyl group is bound to a nitrogen atom of a piperidine structure, or also preferably a hindered amine light stabilizer where an alkoxy group is bound to a nitrogen atom of a piperidine structure.

The light stabilizer may be used singly or in combinations of two or more kinds thereof.

Examples of the hindered amine light stabilizer where an alkyl group is bound to a nitrogen atom of a piperidine structure include "Tinuvin 765" and "Tinuvin 622SF" manufactured by BASF SE, and "Adeka Stab LA-52" manufactured by ADEKA Corporation.

Examples of the hindered amine light stabilizer where an alkoxy group is bound to a nitrogen atom of a piperidine structure include "Tinuvin XT-850FF" and "Tinuvin XT-855FF" manufactured by BASF SE, and "Adeka Stab LA-81" manufactured by ADEKA Corporation.

Examples of the hindered amine light stabilizer where a hydrogen atom is bound to a nitrogen atom of a piperidine structure include "Tinuvin 770DF" manufactured by BASF SE and "Hostavin N24" manufactured by Clariant AG.

The content of the light stabilizer in each of the resin layers (for example, each of diffusion layer, transparent resin layer (or first and second resin layers), and third and fourth resin layers) is preferably 0.001 parts by mass or more and 0.5 parts by mass or less based on 100 parts by mass of the thermoplastic resin. The content is 0.001 parts by mass or more, and thus the resin film can be appropriately prevented from being degraded due to ultraviolet light or the like and can be enhanced in durability. The content is 0.5 parts by mass or less, and thus the effect corresponding to the content is also easily exerted.

The content of the light stabilizer is preferably 0.005 parts by mass or more and 0.4 parts by mass or less, more preferably 0.01 parts by mass or more and 0.2 parts by mass or less based on 100 parts by mass of the thermoplastic resin.

Each of the resin layers constituting the resin film may, if necessary, appropriately comprise an infrared absorber, a fluorescent whitener, a crystal nucleator, a carboxylic acid metal salt, a heat shield material and/or the like, in addition to the additive(s).

### [Method for producing resin film]

The resin film can be produced by obtaining a resin composition for formation of each of the layers, forming each of the layers (for example, first resin layer, light diffusion layer, and second resin layer, or first resin layer, light diffusion layer, second resin layer, third resin layer, and fourth resin layer) constituting the resin film, from the resin composition, and, if necessary, laminating the layers for integration.

The resin film can also be produced by forming each of the layers constituting the resin film, by co-extrusion or the like and also laminating the layers (first resin layer, light diffusion layer, and second resin layer, or, first resin layer, light diffusion layer, second resin layer, third resin layer, and fourth resin layer) for integration.

In particular, production by co-extrusion is preferable. Examples of such co-extrusion include a method to be performed with a feed block for multilayer co-extrusions being attached. Such co-extrusion may be made by formation with the change in thickness by adjustment of the amount of feeding of each resin in formation of the first resin layer, the light diffusion layer, and the second resin layer.

The resin composition for formation of each of the layers may be obtained by mixing components constituting the resin composition, for example, the thermoplastic resin, and the light diffusion particle, the plasticizer, and other additive(s), if necessary, compounded, in a kneading apparatus or the like by a known method. For example, in a case where each of the layers constituting the resin film is formed using an extruder such as a co-extruder, the components constituting the resin composition may be mixed in the extruder.

### <Laminated glass>

The present invention further provides a laminated glass. The laminated glass of the present invention comprises paired glass members and the resin film placed between the paired glass members. The resin film may be used as an interlayer film for laminated glass, and the paired glass members may be bonded with the resin film being interposed. The configuration of the resin film in the laminated glass is as described above, and the description thereof is omitted. The laminated glass is typically used as a screen, as described below.

The glass members in the laminated glass are respectively laminated on both surfaces of a resin film 10. For example, as illustrated in Fig. 1, the resin film 10 includes a transparent resin layer 11 and a light diffusion layer 12, and glass members 21 and 22 may be respectively laminated on both surfaces of the transparent resin layer 11. Moreover, as illustrated in Fig. 2, the resin film 10 comprises not only a transparent resin layer 11 and a light diffusion layer 12, but also third and fourth resin layers 13 and 14, and here one glass member 21 may be laminated on a surface of the transparent resin layer 11 and other glass member 22 may be laminated on a surface of the fourth resin layer 14.

### (Glass member)

The glass member for use in the laminated glass may be a glass plate. The glass plate may be either inorganic glass or organic glass, and inorganic glass is preferable. The inorganic glass is not particularly limited, and examples thereof include clear glass, clear float glass, float plate glass, reinforced glass, colored glass, polished plate glass, figured glass, meshed plate glass, wired plate glass, ultraviolet absorption plate glass, infrared reflection plate glass, infrared absorption plate glass and green glass.

The organic glass here used is one generally called resin glass and is not particularly limited, and examples thereof include organic glass formed from, for example, a polycarbonate plate, a polymethyl methacrylate plate or a polyester plate.

The respective materials forming such two glass members may be the same as or different from each other. For example, one thereof may be inorganic glass and the other thereof may be organic glass, and preferably both the two glass members are inorganic glass or organic glass.

The respective thicknesses of the glass members are not particularly limited, and are each preferably 0.5 mm or more and 5 mm or less, more preferably 0.7 mm or more and 3 mm or less.

The method for producing the laminated glass is not particularly limited. For example, the resin film is sandwiched between the two glass members, and these members are allowed to pass through a pressing roll or are placed in a rubber bag and evacuated under reduced pressure, to thereby allow air remaining between the two glass members and the resin film to be degassed. Thereafter, the glass members are preliminarily bonded with the resin film at about 70 to 110°C, to obtain a laminate. Next, the laminate is placed in an autoclave or pressed, and then is compression bonded at about 120 to 150°C and at a pressure of 1 to 1.5 MPa. Thus, the laminated glass can be obtained. In production of the laminated glass, the laminated glass may also be produced, for example, with a plurality of resin layers being laminated for integration to thereby form the resin film.

### [Screen]

In one embodiment of the present invention, the resin film is used for a screen. The screen is a screen for image display. Specifically, one surface of the laminated glass may be irradiated with light from a light source apparatus constituting a projector or the like, and the light for irradiation may be scattered on the resin film and displayed in the form of an image on the screen. The screen is preferably the above laminated glass, but is not necessarily the laminated glass as long as it comprises the above resin film. The screen may be, for example, a screen of so-called outer sticking, where the resin film adheres to one surface of one glass member and the resin film does not adhere to another glass member. The same glass member as the glass member described above may also be used in a screen other than the laminated glass.

The image display screen may be a rear-projection or front projection image display screen, and is preferably a rear-projection image display screen. Use in the form of rear-projection allows image display at a high contrast to be easily realized.

A rear-projection image display screen is a screen for which allows one surface of the laminated glass to be irradiated with light from a light source apparatus and allows an image to be observed from other surface of the laminated glass. A front projection image display screen is a screen which allows one surface of the laminated glass to be irradiated with light from a light source apparatus and allows an image to be observed from such one surface of the laminated glass (namely, a surface irradiated with light from a light source apparatus).

A suitable value of the maximum intensity A/maximum intensity B and a suitable value of the maximum intensity A/maximum intensity C, with respect to transmitted light in irradiation of the screen of the present invention with simulated solar light by a solar simulator, are also respectively the same as the values described with respect to the laminated glass produced by adhesion of two sheets of standard glass with the resin film being interposed.

The maximum intensities in the screen may be determined by irradiation of any one surface of the screen with simulated solar light and measurement on other surface thereof. The detail of the method for measuring the maximum intensities is as described in Examples.

Furthermore, suitable values of the transmittance and the haze value of the screen of the present invention are also respectively the same as the values described with respect to the laminated glass produced by adhesion of two sheets of standard glass with the resin film being interposed, and the description thereof is omitted. The transmittance of the screen can be determined by measurement according to JIS R3212 (2015), and the haze value thereof can be measured according to JIS K6714.

The present invention also provides an image display system where the laminated glass is used in an image display screen, as described above. The image display system comprises the laminated glass and a light source apparatus for irradiation of one surface of the laminated glass with light, and displays an image on the laminated glass by light from the light source apparatus. The image display system may be either rear-projection one or front projection one, as described above, and is preferably rear-projection one.

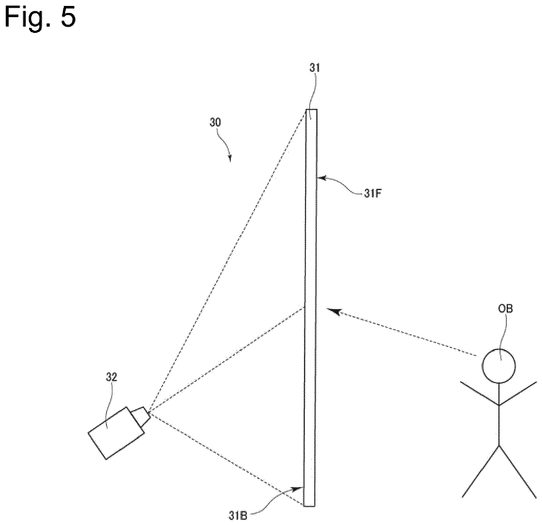

Hereinafter, one embodiment of the rear-projection image display system is described in detail with reference to Fig. 5.

An image display system 30 according to one embodiment of the present invention comprises laminated glass 31 and a light source apparatus 32. The laminated glass 31 may have any structure of the laminated glass described above. The image display system 30 allows one surface (rear surface 31B) of the laminated glass 31 to be irradiated with light by the light source apparatus 32 and allows an image to be displayed by the light for irradiation, from other surface (front surface 31F) of the laminated glass 31. The image at the front surface 31F side is viewed by an observer OB located in front of the laminated glass 31. The image displayed from the front surface 3 IF may be a screen image such as a moving image, or may be, for example, a still image, a message including a character, an icon and/or a trademark, or a logo, and is not particularly limited.

The light source apparatus 32 used can be a light source conventionally used in a rear-projection image display system, and is, for example, a projector capable of producing various images such as a screen image. The projector used is preferably, for example, a screen image display system using a digital mirror device, known as a so-called DLP (registered trademark) projector.

In a case where, for example, a fixed icon and a fixed message are displayed with no change of an image produced, no projector is needed to be used and a light source apparatus for irradiating the laminated glass 31 with certain light depending on the image may be used.

The light for irradiating the laminated glass 31 in the rear-projection system is light corresponding to an image mirror-reversed relative to an image displayed. The method of irradiation with the light corresponding to the image mirror-reversed is not particularly limited, and mirror-reversing may be made by adjustment of an image signal or by use of, for example, a reversing mirror.

The light emitted from the light source apparatus 32 in the image display system 30 may be used for direct irradiation of the laminated glass 31, or for irradiation of the laminated glass 31 via an optical member such as a reflecting mirror or a reversing mirror. A screen other than the laminated glass may be used instead of the laminated glass in the image display system 30.

The resin film, the laminated glass and the screen of the present invention can be used in various fields, and are used in, for example, various types of window glass. More specifically, these can be used in window glass for conveyances such as automobiles, railway vehicles, airplanes and marine vessels, or window glass for buildings. The resin film, the laminated glass and the screen can be used in various types of window glass, to thereby allow various images such as a screen image, a message and a logo to be displayed in window glass. The resin film, the laminated glass and the screen can also be used in a display for various electric instruments such as household electric instruments. In particular, the resin film, the laminated glass and the screen are more preferably used in window glass for automobiles. The window glass for automobiles can be used in any of windshield, side glass, and rear glass, because the transmittance can be increased as described above.

For example, in the case of use in window glass for buildings, a light source apparatus may be disposed in each of such buildings, an inside surface of the window glass may be irradiated with light from the light source apparatus, and thus various images may be displayed on an outside surface of the window glass. Similarly, in the case of use in window glass for conveyances, a light source apparatus may be disposed in each of such conveyances and thus various images may be displayed on an outside surface of the window glass.

An outside surface of window glass for buildings or conveyances may also be irradiated with light from a light source apparatus and thus an image may also be displayed on an inside surface of the window glass. Specifically, a light source apparatus may be disposed on, for example, a hood or a trunk of an automobile, windshield, side glass, rear glass and/or the like may be irradiated with light from outside, and thus an image may be displayed on an inside surface of such glass.

### Examples

The present invention is described in more detail with reference to Examples, but the present invention is not limited to such Examples at all.

Various physical properties were here measured and evaluated as follows.

### [Method for measuring angle θ]

The angle θ representing the gradient of the thickness of the light diffusion layer was determined by connection of other end of the light diffusion layer and a point at a position of 10% from such other end in a cross section along OD and the thickness direction, with a straight line, and defining an angle formed by such connection, as θ.

### [Total thickness of film]

The total thickness of each film was determined by measurement of the average thickness according to 10-point average, with a microscope "DSX500" manufactured by Olympus Corporation. The total thickness of each film in the present Examples and Comparative Examples corresponded to the thickness D3 of the transparent resin layer.

### [Thicknesses D1 and D2 of light diffusion layer]

The thicknesses D1 and D2 of the light diffusion layer were determined by thickness measurement of the light diffusion layer with a microscope "DSX500" manufactured by Olympus Corporation.

### [Average particle size of light diffusion particle]

The average particle size of the light diffusion particle was measured with "LA-960" manufactured by Horiba Ltd., by a laser diffraction/scattering method.

### [Maximum intensities A, B and C]

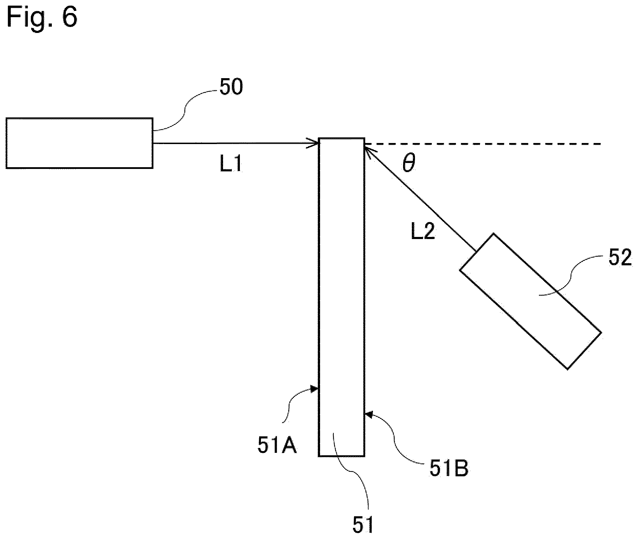

In a dark room, as illustrated in Fig. 6, an output end 50 of a solar simulator ("HAL-320W" manufactured by Asahi Spectra Co., Ltd.) was placed at a position of 30 cm (distance L1) apart in a direction perpendicular to one surface 51A of a laminated glass 51, and the laminated glass was irradiated with simulated solar light.

The intensity at each wavelength on other surface 51B of the laminated glass 51 was measured with a brightness meter 52 ("SR-3AR" manufactured by Topcon Technohouse Corporation) located at a distance L2 of 35 cm from a measurement position on the other surface 51B of the laminated glass 51. The maximum intensities in respective wavelength ranges, among the measurement results, were defined as maximum intensities A, B and C. Here, an end portion of laminated glass, where the light-scattering layer had the maximum thickness, and the vicinity thereof, in the region Y, were irradiated with simulated solar light, and the measurement position was also set to such a glass end portion. The intensity at each wavelength was measured with a brightness meter 52, from a position at which the angle θ relative to a perpendicular direction of the other surface 51B was 45°, as illustrated in Fig. 6. Herein, the output of the solar simulator was set to the maximum output (100%) of the solar simulator.

### [Transmittance]

The transmittances in the regions Y and Z of each laminated glass obtained in Examples and Comparative Examples were each obtained by measurement of the visible light transmittance with a spectrophotometer ("U-4100" manufactured by Hitachi High-Tech Science Corporation) according to JIS R3212 (2015). The transmittance in the region Y was obtained by measurement of the transmittance of a portion of the light diffusion layer having the largest thickness, namely, a portion having the lowest transmittance.

### [Haze value]

The haze values in the regions Y and Z of each laminated glass obtained in Examples and Comparative Examples were each obtained by measurement with HAZE METER "HM-150N" manufactured by Murakami Color Research Laboratory, according to JIS K6714. The haze value in the region Y was obtained by measurement of the haze value of a portion of the light diffusion layer having the largest thickness, namely, a portion having the highest haze value.

### [Viewability in irradiation by strong light source]

One surface of each laminated glass obtained in Examples and Comparative Examples was irradiated with simulated solar light at an output of 100% from a solar simulator ("HAL-320W" manufactured by Asahi Spectra Co., Ltd.) whose output end was placed at a position of 35 cm apart in a perpendicular direction, and the laminated glass was observed from other surface thereof. A case where a boundary between a display region and a transparent region was not clearly seen was evaluated as "A", and a case where the boundary was clearly seen was evaluated as "B".

### Each component used in Examples and Comparative Examples is as follows.

### (Polyvinyl acetal resin)

PVB: polyvinyl butyral resin, average degree of polymerization: 1700; amount of hydroxyl group: 30.5% by mol; degree of acetylation: 1% by mol; degree of acetalization: 68.5% by mol
(Plasticizer)
3GO: triethylene glycol-di-2-ethylhexanoate
(Light diffusion particle)
Silver nanoparticle: particle including silver particle serving as core, and having core-shell structure ("silver nanosphere" manufactured by Lux Labs, Inc.)
Nanodiamond: nanodiamond particle "DINNOVARE" manufactured by Daicel Corporation
Titanium oxide particle: particle including titanium oxide particle serving as core, and having core-shell structure ("titanium oxide nanosphere" manufactured by Lux Labs, Inc.)

### [Example 1]

### (Production of resin film)

A resin composition for a light diffusion layer was obtained by kneading 100 parts by mass of PVB as a polyvinyl acetal resin, 40 parts by mass of 3GO as a plasticizer, and a silver nanoparticle as a light diffusion particle in the co-extruder. The silver nanoparticle was here added so that the content of the silver nanoparticle in the light diffusion layer was 0.0057% by mass. Each resin composition for first and second resin layers (transparent resin layers) was obtained by kneading 100 parts by mass of PVB as a polyvinyl acetal resin and 40 parts by mass of 3GO as a plasticizer in the co-extruder.

The obtained resin compositions for a first resin layer, a light diffusion layer, and a second resin layer were co-extruded in the listed lamination order by the co-extruder so that the thickness of the light diffusion layer gradually decreased from one end to other end, and thus a resin film (100 cm length × 100 cm width) illustrated in Fig. 1 was obtained. Each dimension of the resin film was as described in Table 1. The width direction was here a direction in which the thickness gradually decreased, and also a direction matched with OD in Fig. 1. The same also applies to the following.

### (Production of laminated glass)

Two sheets of clear glass (50 cm length × 80 cm width × 2.5 mm thickness, visible light transmittance 90.4%, manufactured by Central Glass Co., Ltd.) according to JIS R3202 (2011) and a resin film of 50 cm length × 80 cm width were prepared, and the resin film was sandwiched between the two sheets of clear glass, to obtain a laminate. The laminate was placed in a rubber bag, subjected to degassing at a degree of vacuum of 2.6 kPa for 20 minutes, thereafter transferred into an oven with being subjected to degassing, furthermore retained at 90°C for 30 minutes and pressed in vacuum, and temporarily compression bonded. The laminate temporarily compression bonded was compression bonded in an autoclave in conditions of 135°C and a pressure of 1.2 MPa for 20 minutes, to thereby obtain laminated glass.

### [Examples 2 to 6 and Comparative Examples 1 and 2]

The procedures the same as in Example 1 were performed except that the content of the plasticizer for use in each of the resin compositions, and the type and the content of the light diffusion particle were changed as shown in Tables 1 and 2 and furthermore the width E of the light diffusion layer was changed, to thereby adjust the angle θ as shown in Tables 1 and 2.

**[Table 1]**

| | | | Example 1 | Example 2 | Example 3 | Example 4 | Comparative Example 1 | Comparative Example 2 |
|---|---|---|---|---|---|---|---|---|
| | Thermoplastic resin | Type | PVB | PVB | PVB | PVB | PVB | PVB |
| | Plasticizer | Type | 3GO | 3GO | 3GO | 3GO | 3GO | 3GO |
| Light diffusion layer | | parts/phr | 40 | 40 | 40 | 40 | 40 | 40 |
| | Light diffusion particle | Type | Silver nanoparticle | Silver nanoparticle | Silver nanoparticle | Nanodiamond | Silver nanoparticle | Nanodiamond |
| | | parts/% by weight | 0.0057 | 0.0057 | 0.0057 | 0.0057 | 0.0057 | 0.0057 |
| Transparent resin layer (first and second resin layers) | Thermoplastic resin | Type | PVB | PVB | PVB | PVB | PVB | PVB |
| | Plasticizer | Type | 3GO | 3GO | 3GO | 3GO | 3GO | 3GO |
| | | parts/phr | 40 | 38 | 40 | 38 | 40 | 38 |
| Content of light diffusion particle (entire display region) | | % by mass | 0.0015 | 0.0015 | 0.0015 | 0.0015 | 0.0015 | 0.0015 |
| | Total thickness D3 of layers | mm | 0.76 | 0.76 | 0.76 | 0.76 | 0.76 | 0.76 |
| | Thickness D2 of light diffusion layer in region Y | mm | 0.2 | 0.2 | 0.2 | 0.2 | 0.2 | 0.2 |
| | Width E of light diffusion layer | mm | 177.8 | 254 | 381 | 177.8 | 177.8 | 177.8 |
| | Thickness D1 of other layer | mm | 0.05 | 0.05 | 0.05 | 0.05 | 0.05 | 0.05 |
| | Angle q of light diffusion layer | mrad | 0.84 | 0.59 | 0.39 | 0.84 | 1 | 1 |
| | Transmittance in region Y | % | 84 | 84 | 84 | 84 | 84 | 84 |
| | Haze in region Y | % | 2.5 | 2.5 | 2.5 | 2.5 | 2.5 | 2.5 |
| | Transmittance in region Z (clear) | % | 88 | 88 | as | 88 | 88 | 88 |
| Evaluation | Haze in region Z (clear) | % | 03 | 03 | 0.3 | 03 | 03 | 03 |
| | Maximum intensity A, wavelength | nm | 458 | 458 | 458 | 445 | 458 | 445 |
| | Maximum intensity A, intensity | - | 1.3 | 1.3 | 1.3 | 1.32 | 1.3 | 1.32 |
| | Maximum intensity B, wavelength | nm | 553 | 553 | 553 | 553 | 553 | 553 |
| | Maximum intensity B, intensity | - | 196 | 1.96 | 1.96 | 1.96 | 1.96 | 1.96 |
| | Maximum intensity C, wavelength | nm | 579 | 579 | 579 | 581 | 579 | 581 |
| | Maximum intensity C, intensity | - | 15 | 1.5 | 1.5 | 1.38 | 1.5 | 1.38 |
| | Maximum intensity A/Maximum intensity B | - | 0.66 | 0.66 | 0.66 | 0.67 | 0.66 | 0.67 |
| | Maximum intensity A/Maximum intensity C | - | 0.87 | 0.87 | 0.87 | 0.96 | 0.87 | 0.96 |
| | Viewability in irradiation by strong light source | - | A | A | A | A | B | B |

**[Table 2]**

| | | | Example 5 | Example 6 |
|---|---|---|---|---|
| Light diffusion layer | Thermoplastic resin | Type | PVB | PVB |
| | Plasticizer | Type | 3GO | 3GO |
| | | parts/phr | 40 | 40 |
| | Light diffusion particle | Type | Titanium oxide particle | Titanium oxide particle |
| | | parts/% by weight | 0.01 | 0.0057 |
| Transparent resin layer (first and second resin layers) | Thermoplastic resin | Type | PVB | PVB |
| | Plasticizer | Type | 3GO | 3GO |
| | | parts/phr | 40 | 38 |
| Content of light diffusion particle (entire display region) | | % by mass | 0.0026 | 0.0015 |
| Evaluation | Total thickness D3 of layers | mm | 0.76 | 0.76 |
| | Thickness D2 of light diffusion layer in region Y | mm | 0.2 | 0.2 |
| | Width E of light diffusion layer | mm | 177.8 | 254 |
| | Thickness D1 of other layer | mm | 0.05 | 0.05 |
| | Angle q of light diffusion layer | mrad | 0.84 | 0.59 |
| | Transmittance in region Y | % | 79.1 | 84 |
| | Haze in region Y | % | 5 | 2.5 |
| | Transmittance in region Z (clear) | % | 88 | 88 |
| | Haze in region Z (clear) | % | 0.3 | 0.3 |
| | Maximum intensity A, wavelength | nm | 458 | 458 |
| | Maximum intensity A, intensity | - | 1.3 | 1.3 |
| | Maximum intensity B, wavelength | nm | 553 | 553 |
| | Maximum intensity B, intensity | - | 1.96 | 1.96 |
| | Maximum intensity C, wavelength | nm | 579 | 579 |
| | Maximum intensity C, intensity | - | 1.5 | 1.5 |
| | Maximum intensity A/Maximum intensity B | - | 0.66 | 0.66 |
| | Maximum intensity A/Maximum intensity C | - | 0.87 | 0.87 |
| | Viewability in irradiation by strong light source | - | A | A |

| | | | | |
|---|---|---|---|---|
| * "parts/phr" in Tables 1 and 2 represents content (parts by mass) based on 100 parts by mass of polyvinyl acetal resin in each resin layer. * "parts/% by weight" in Tables 1 and 2 represents content (% by mass) of light diffusion particle in light diffusion layer. | | | | |

As described above, in each of Examples, the thickness of the light diffusion layer provided in a partial region of the resin film decreased from one end toward other end, and the gradient of the thickness of the light diffusion layer in the region X located within 10% from the other end was 0.9 mrad or less provided that the distance from the one end to the other end was 100%. Therefore, even irradiation with intense light did not cause excess light-scattering at a boundary between the region X and a transparent region Z in which no light diffusion layer was provided, and viewability was favorable.

On the contrary, in each of Comparative Examples, the gradient of the thickness of the light diffusion layer of which thickness decreases from one end toward other end was more than 0.9 mrad. Therefore, irradiation with intense light caused light-scattering at a boundary between the region X and a transparent region Z in which no light diffusion layer was provided, and a linear white line was found and viewability could not be favorable.

### Reference Signs List

10 resin film (interlayer film for laminated glass)
11 transparent resin layer
11A first resin layer
11B second resin layer
12 light diffusion layer (light diffusion layer)
12A one end
12B other end
13 third resin layer
14 fourth resin layer
21, 22 glass member
25, 31, 51 laminated glass (screen)
30 image display system
32 light source apparatus
OB observer
D1, D2, D3 thickness
E width
OD one direction perpendicular to thickness direction
θ angle
X, Y, Z region

## Claims

1. A resin film comprising a transparent resin layer comprising a thermoplastic resin, and a light diffusion layer comprising a thermoplastic resin and a light diffusion particle, the light diffusion layer being placed in the transparent resin layer, a thickness of the light diffusion layer decreasing from one end of the light diffusion layer toward other end opposite to the one end in one direction perpendicular to a thickness direction of the resin film, and a gradient of the thickness of the light diffusion layer being 0.9 mrad or less in a region located within 10% from the other end provided that a distance from the one end to the other end is 100%.

2. The resin film according to claim 1, wherein a content of the light diffusion particle based on 100% by mass of the resin film in a region in which the light diffusion layer is provided is 0.00001% by mass or more and 1% by mass or less.

3. The resin film according to claim 1 or 2, wherein, when a region in which the light diffusion layer is provided, of a laminated glass obtained by adhesion of two sheets of clear glass having a thickness of 2.5 mm with the resin film being interposed is irradiated with simulated solar light by a solar simulator, a ratio of a maximum intensity A at 430 to 460 nm to a maximum intensity B at 530 to 560 nm (maximum intensity A/maximum intensity B) of transmitted light is 1.0 or less.

4. The resin film according to any one of claims 1 to 3, wherein, when a region in which the light diffusion layer is provided, of a laminated glass obtained by adhesion of two sheets of clear glass having a thickness of 2.5 mm with the resin film being interposed is irradiated with simulated solar light by a solar simulator, a ratio of a maximum intensity A at 430 to 460 nm to a maximum intensity C at 560 to 600 nm (maximum intensity A/maximum intensity C) of transmitted light is 1.2 or less.

5. The resin film according to any one of claims 1 to 4, wherein the light diffusion particle is at least one selected from the group consisting of a nanoparticle comprising at least any of a silver element and a titanium element, or nanodiamond.

6. The resin film according to any one of claims 1 to 5, wherein the thermoplastic resins comprised in the transparent resin layer and the light diffusion layer are each a polyvinyl acetal resin.

7. The resin film according to any one of claims 1 to 6, wherein the transparent resin layer comprises a first resin layer and a second resin layer, and the light diffusion layer is placed between the first and second resin layers.

8. The resin film according to any one of claims 1 to 7, wherein the transparent resin layer and the light diffusion layer each comprise a plasticizer.

9. The resin film according to any one of claims 1 to 8, comprising third and fourth resin layers provided in the listed order, on one surface of the transparent resin layer.

10. The resin film according to claim 9, wherein thermoplastic resins comprised in the third and fourth resin layers are each a polyvinyl acetal resin.

11. The resin film according to claim 9 or 10, wherein
the transparent resin layer, the light diffusion layer, and the third and fourth resin layers each comprise a plasticizer, and
a content of the plasticizer based on 100 parts by mass of the thermoplastic resin in the third resin layer is higher than each content of the plasticizer based on 100 parts by mass of the thermoplastic resin in each of the transparent resin layer, the light diffusion layer, and the fourth resin layer.

12. The resin film according to any one of claims 1 to 11, wherein a thickness of a tip of the light diffusion layer at the other end side is 100 µm or less.

13. The resin film according to any one of claims 1 to 12, wherein a shape of the light diffusion layer at the other end side is a cross-sectional triangle or a cross-sectional trapezoid.

14. The resin film according to any one of claims 1 to 13, wherein the resin film is an interlayer film for laminated glass.

15. A laminated glass comprising the resin film according to any one of claims 1 to 14 and paired glass members, wherein the resin film is placed between the paired glass members.

16. A screen comprising the resin film according to any one of claims 1 to 14.
